# EUROPEAN PATENT APPLICATION

(11) **EP 4 670 962 A1**
(43) Date of publication of application: **31.12.2025**
(21) Application number: 24781171.4
(22) Date of filing: 26.03.2024
(51) Int. Cl.: B32B 7/023

(54) **BACK COVER INCLUDING MULTI-LAYER RETRO-REFLECTIVE STRUCTURE AND TERMINAL DEVICE**

(30) Priority: 27.03.2023 KR 20230039840; 02.05.2023 KR 20230057024
(71) Applicant: Samsung Electronics Co., Ltd., Suwon-si, Gyeonggi-do 16677 (KR)
(72) Inventor: CHOI, Jongmun, Suwon-si Gyeonggi-do 16677 (KR); KIM, Hakju, Suwon-si Gyeonggi-do 16677 (KR); SIN, Wanju, Suwon-si Gyeonggi-do 16677 (KR); CHOI, Hyunsuk, Suwon-si Gyeonggi-do 16677 (KR)
(74) Representative: Nederlandsch Octrooibureau
(86) International application number: PCT/KR2024/003741
(87) International publication number: WO 2024/205180

(57) **Abstract**

The present disclosure relates to a terminal device including a multi-layer retro-reflective structure. According to one embodiment, a terminal device may include a housing and a back cover forming a rear surface of the housing, wherein the back cover includes: a shield print layer; a base layer disposed on the shield print layer; two or more prism pattern layers arranged on the base layer; one or two or more substrate layers bonded to at least one of the two or more prism pattern layers; and a cover layer disposed on the two or more prism pattern layers.

## Description

### Technical Field

The disclosure relates to a back cover and a terminal device including a multilayer retroreflective structure.

### Background Art

Glass materials are being used as back cover materials for terminal devices. In high-end flagship products, glass materials are used in most products to emphasize luxury and are applied with various color material finishing (CMF) technologies for decorative treatment. A glass back cover is manufactured by laminating a deco film deposited or printed on the inner surface of tempered glass using an adhesive such as optically clear adhesive (OCA), and may additionally include optical patterns through ultraviolet (UV) molding methods (e.g., imprinting UV resin with a soft mold) as needed. A representative example of optical patterns is lenticular patterns, and the application of such UV molding patterns may provide decorative effects such as three-dimensionality or depth to glass back covers.

Recently, methods for implementing retroreflective effects using corner cube patterns through UV molding methods have been developed. In particular, retroreflective films with corner cube patterns are being used for signs such as automobile license plates and safety signs. Retroreflective films with corner cube patterns have high brightness due to retroreflective effects, so there have been attempts to apply them not only to traffic-related fields but also to deco films for terminal devices.

Retroreflective films for decorating terminal devices require higher completeness for luxury, and finer corner cube patterns are applied compared to traffic retroreflective films, requiring patterns to be manufactured as indistinguishable to the naked eye as possible. These fine corner cube patterns are called micro prism patterns (or prism patterns), and prism patterns have less than half the size of corner cube patterns.

### Disclosure of Invention

### Solution to Problems

The disclosure provides a back cover including a retroreflective structure for terminal devices.

The disclosure provides a back cover including a retroreflective structure with no or decreased non-reflective sections.

The disclosure provides a back cover including a retroreflective structure with no or decreased phenomena such as waviness, lifting, warping, and peeling.

The disclosure provides a terminal device with enhanced aesthetics including the above-described retroreflective structure.

A terminal device 200 including a multilayer retroreflective structure according to an aspect of the disclosure may include a housing 210 and a back cover 700, 800 forming a rear surface 210b of the housing 210. The back cover 700, 800 may include a shielding print layer 711, a base layer 712 disposed on the shielding print layer 711, two or more prism pattern layers 714-1, 714-2 disposed on the base layer 712, one or more substrate layers 715-1, 715-2 bonded to at least one of the two or more prism pattern layers 714-1, 714-2, and a cover layer 717 disposed on the two or more prism pattern layers 714-1, 714-2.

According to an embodiment, the two or more prism pattern layers 714-1, 714-2 may include a first prism pattern layer 714-1 and a second prism pattern layer 714-2 disposed above the first prism pattern layer 714-1, and the first prism pattern layer 714-1 and the second prism pattern layer 714-2 may be spaced apart from each other.

According to an embodiment, the one or more substrate layers 715-1, 715-2 may include a first substrate layer 715-1 and a second substrate layer 715-2, the first prism pattern layer 714-1 may be bonded to the first substrate layer 715-1, and the second prism pattern layer 714-2 may be bonded to the second substrate layer 715-2.

According to an embodiment, the first prism pattern layer 714-1 may include a first patterned area PA1 and a first non-patterned area NPA1, the second prism pattern layer 714-2 may include a second patterned area PA2 and a second non-patterned area NPA2, at least a portion of the first patterned area PA1 and the second non-patterned area NPA2 may overlap, and at least a portion of the second patterned area PA2 and the first non-patterned area NPA1 may overlap.

According to an embodiment, in the first patterned area PA1, at least a portion of the first prism pattern layer 714-1 may be spaced apart from the base layer NPA1 and form a first air cell.

According to an embodiment, in the second non-patterned area NPA2, the second prism pattern layer 714-2 may be bonded to the first substrate layer 715-1.

According to an embodiment, in the second patterned area PA2, at least a portion of the second prism pattern layer 714-2 may be spaced apart from the first substrate layer 715-1 and form a second air cell.

According to an embodiment, the first prism pattern layer 714-1 may be thicker than the second prism pattern layer 714-2.

A multilayer retroreflective film 500 according to an aspect of the disclosure may include a shielding print layer 711, a base layer 712 disposed on the shielding print layer 711, two or more prism pattern layers 714-1, 714-2 disposed on the base layer 712, one or more substrate layers 715-1, 715-2 bonded to at least one of the two or more prism pattern layers 714-1, 714-2, and a cover layer 714 disposed on the two or more prism pattern layers 714-1, 714-2.

According to an embodiment, the two or more prism pattern layers 714-1, 714-2 may include a first prism pattern layer 714-1 and a second prism pattern layer 714-2 disposed above the first prism pattern layer 714-1, and the first prism pattern layer 714-1 and the second prism pattern layer 714-2 may be spaced apart from each other.

According to an embodiment, the one or more substrate layers 715-1, 715-2 may include a first substrate layer 715-1 and a second substrate layer, the first prism pattern layer 714-1 is bonded to the first substrate layer 715-1, and the second prism pattern layer 714-2 may be bonded to the second substrate layer.

According to an embodiment, the first prism pattern layer 714-1 may include a first patterned area PA1 and a first non-patterned area NPA1, the second prism pattern layer 714-2 may include a second patterned area PA2 and a second non-patterned area NPA2, at least a portion of the first patterned area PA1 and the second non-patterned area NPA2 may overlap, and at least a portion of the second patterned area PA2 and the first non-patterned area NPA1 may overlap.

According to an embodiment, in the first non-patterned area NPA1, the first prism pattern layer 714-1 may be bonded to the base layer 712.

In the first patterned area PA1, at least a portion of the first prism pattern layer 714-1 may be spaced apart from the base layer NPA1 and form a first air cell.

According to an embodiment, in the second non-patterned area NPA2, the second prism pattern layer 714-2 may be bonded to the first substrate layer 715-1.

According to an embodiment, in the second patterned area PA2, at least a portion of the second prism pattern layer 714-2 may be spaced apart from the first substrate layer 715-1 and form a second air cell.

According to an embodiment, the first prism pattern layer 714-1 may be thicker than the second prism pattern layer 714-2.

According to an embodiment, the second prism pattern layer 714-2 may be bonded to the cover layer 717.

According to an embodiment, the two or more prism pattern layers 714-1, 714-2 may include a plurality of micro prisms MP1, MP2, the plurality of micro prisms MP1, MP2 may include a central micro prism MP1-1, MP2-1 and one or more peripheral micro prisms MP1-2, MP2-2, and the central micro prism MP1-1, MP2-1 and the one or more peripheral micro prisms MP1-2, MP2-2 may have different dimensions.

Effects obtainable from exemplary embodiments of the disclosure may be clearly derived and understood by those skilled in the art to which the exemplary embodiments of the disclosure belong from the following description. Unintended effects from implementing exemplary embodiments of the disclosure may also be derived by those skilled in the art from the exemplary embodiments of the disclosure.

### Brief Description of Drawings

FIG. 1 is a block diagram illustrating an electronic device 101 in a network environment 100 according to various embodiments.
FIG. 2 is a front perspective view illustrating an electronic device according to various embodiments of the disclosure.
FIG. 3 is a rear perspective view illustrating an electronic device according to various embodiments of the disclosure.
FIG. 4 is an exploded perspective view illustrating an electronic device according to various embodiments of the disclosure.
FIG. 5 is a perspective view illustrating an electronic device including a retroreflective structure according to various embodiments of the disclosure.
FIG. 6 exemplarily illustrates a cross-section of a back cover applicable to an electronic device.
FIG. 7 is a cross-sectional view illustrating a back cover including a multilayer retroreflective structure according to various embodiments of the disclosure.
FIG. 8 is a front view illustrating a back cover including a multilayer retroreflective structure according to various embodiments of the disclosure.
FIG. 9 is a cross-sectional view illustrating a back cover including a multilayer retroreflective structure according to various embodiments of the disclosure.
FIG. 10 is a cross-sectional view illustrating a back cover including a multilayer retroreflective structure according to various embodiments of the disclosure.
FIG. 11 is a cross-sectional view illustrating a back cover including a multilayer retroreflective structure according to various embodiments of the disclosure.
FIG. 12 is a cross-sectional view illustrating a back cover including a multilayer retroreflective structure according to various embodiments of the disclosure.
FIG. 13 exemplarily illustrates a processing mold for manufacturing a back cover including a multilayer retroreflective structure according to various embodiments of the disclosure.
FIG. 14 exemplarily describes a method for manufacturing a back cover including a multilayer retroreflective structure according to various embodiments of the disclosure.

Reference may be made to the accompanying drawings in the following description, and various examples that may be practiced are shown as examples in the drawings. Other examples may be utilized and structural changes may be made without departing from the scope of the various examples.

### Mode for the Invention

Exemplary embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

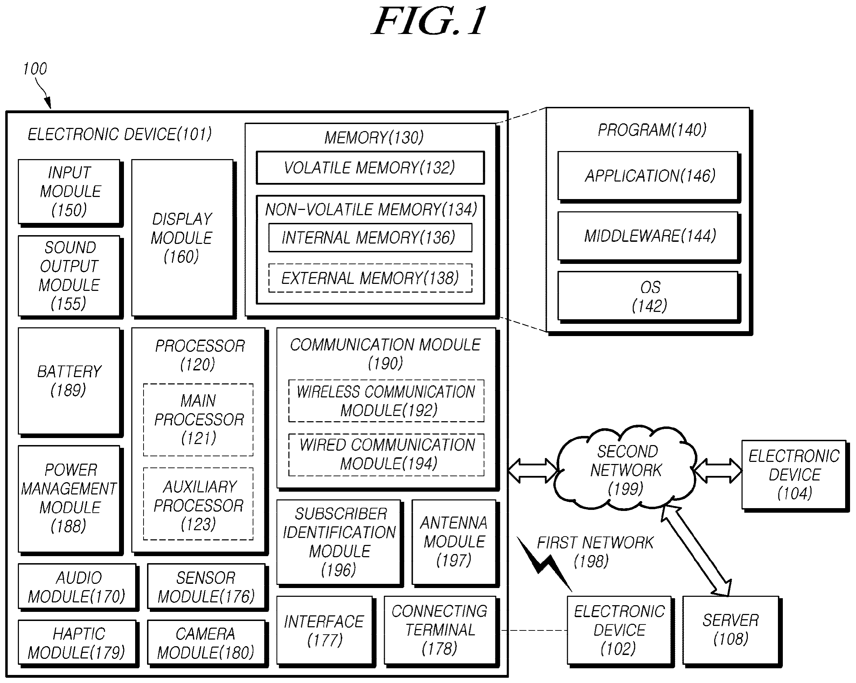

FIG. 1 is a block diagram illustrating an electronic device 101 in a network environment 100 according to various embodiments;

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Hereinafter, the external appearance and internal configuration of an electronic device according to various embodiments of the disclosure are described. According to an embodiment, the external appearance and internal configuration of the electronic device may be described with reference to a plurality of directions. The plurality of directions include a first direction (e.g., +X-axis direction), a second direction (e.g., +Y-axis direction), and a third direction (e.g., +Z-axis direction). According to an embodiment, the plurality of directions may further include a fourth direction (e.g., -X-axis direction), a fifth direction (e.g., -Y-axis direction), and a sixth direction (e.g., -Z-axis direction) respectively opposing the first direction, the second direction, and the third direction. According to an embodiment, the vertical direction may include the Z-axis direction (or -Z-axis direction), and the horizontal direction may include the X-axis direction (or -X-axis direction) and the Y-axis direction (or -Y-axis direction).

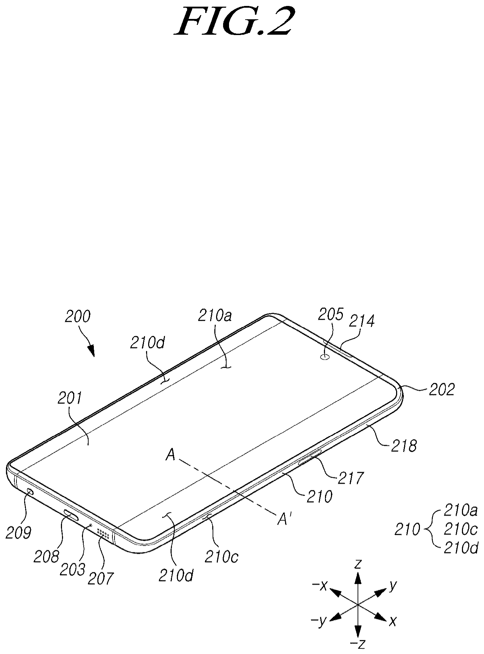

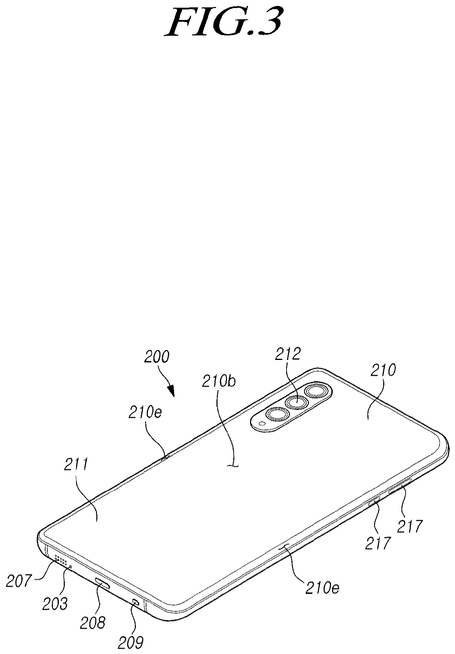

FIG. 2 is a front perspective view illustrating an electronic device according to various embodiments of the disclosure. FIG. 3 is a rear perspective view illustrating an electronic device according to various embodiments of the disclosure.

Referring to FIGS. 2 and 3, an electronic device 200 includes a housing 210 including a front surface 210a, a rear surface 210b, and a side surface 210c surrounding a space between the front surface 210a and the rear surface 210b. The housing 210 may refer to a structure that forms some of the front surface 210a, the rear surface 210b, and the side surface 210c.

At least a portion of the front surface 210a may be formed by a substantially transparent front plate 202 (e.g., a glass plate, polymer plate, or cover glass including various coating layers). The front plate 202 may be formed of 2D glass or 2.5D glass, but is not limited thereto.

The rear surface 210b may be formed by a rear plate 211. The rear plate 211 may be formed of, e.g., glass, ceramic, polymer, metal (e.g., aluminum, stainless steel, or magnesium), or a combination of at least two of the above-described materials.

The side surface 210c may be coupled to the front plate 202 and the rear plate 211 to be formed by the side surface 210c bezel structure 218 (or a "side surface 210c member") including a metal and/or a polymer. At least one of the side bezel structure 218, the front plate 202, and/or the rear plate 211 may be integrally formed. For example, the side bezel structure 218 and the front plate 202, the side bezel structure 218 and the rear plate 211, or the side bezel structure 218 and the front and rear plates 202 and 211 may be integrally formed with each other. The side bezel structure 218 integrally formed may include glass, a metal material such as aluminum, or ceramic, and the other components (e.g., the front plate 202 and/or the rear plate 211) integrally formed may include substantially the same material.

The front plate 202 may include two first edge areas 210d bent from the front surface 210a toward the rear plate 211 and extending seamlessly at two opposite ends of a long edge of the front plate 202. The rear plate 211 may include two second edge areas 210e bent from the rear surface 210b toward the front plate 202 and extending seamlessly at two opposite ends of the long edge. The front plate 202 (or the rear plate 211) may include only one of the first edge areas 210d (or the second edge areas 210e). At least some of the first edge areas 210d or the second edge areas 210e may not be included. In case that at least one of the first edge areas 210d or the second edge areas 210e is not included, a process for processing the first edge areas 210d or the second edge areas 210e may be omitted, thereby reducing production costs.

In case of being viewed from one side of the electronic device 200, the side bezel structure 218 may have a first thickness (or width) on a side surface in which the first edge areas 210d or the second edge areas 210e are not included, and may have a second thickness smaller than the first thickness on a side surface 210c including the first edge areas 210d or the second edge areas 210e.

The electronic device 200 may include at least one of a display 201 (e.g., including the display module 160 of FIG. 1), audio modules 203, 207, and 214 (e.g., including the audio module 170 of FIG. 1), a sensor module (e.g., including the sensor module 176 of FIG. 1), camera modules 205 and 212 (e.g., including the camera module 180 of FIG. 1), an input device 217 (e.g., including the input module 150 of FIG. 1), and/or connector holes 208 and 209 (e.g., including the connecting terminal 178 of FIG. 1). The electronic device 200 may omit at least one of the components or may further include other components.

The display 201 may be visually exposed through at least a portion of the front plate 202. For example, at least a portion of the display 201 may be exposed through the front surface 210a and/or the first edge areas 210d of the front plate 202. The edge of the display 201 may be formed to be substantially the same as the adjacent outer shape of the front plate 202. In order to increase the area in which the display 201 is visually exposed, the gap between the outer periphery of the display 201 and the outer periphery of the front plate 202 may be formed to be substantially the same.

The surface (or the front plate 202) of the housing 210 may include a display area. The display area may be specified as the display 201 is visually exposed. The display area may include a front surface 210a and first edge areas 210d.

One or more hole areas may be included in a portion of the display area of the display 201, and the one or more hole areas may include at least one of a sensor area and/or a camera area. One or more sensors may be disposed in the sensor area, and one or more cameras 205 may be disposed in the camera area. As the camera area is included as at least a portion of the display area, the area allocated to place and install the camera 205 is reduced, so that the display area may be designed to be larger. Further, as the sensor area is included as at least a portion of the display area, the area allocated to place and install the sensor is reduced, so that the display area may be designed to be larger. As such, including a camera area and/or a sensor area as at least a portion of the display area is also referred to as a so-called under panel camera or under panel sensor technology.

The display 201 may include a touch sensing unit for sensing a touch input. The touch sensing unit may include, but is not limited to, a touch sensing circuit unit, a pressure sensor, and/or a digitizer.

The audio modules 203, 207, and 214 may include, e.g., a microphone hole 203 and speaker holes 207 and 214. One or more microphones for obtaining an external sound may be disposed in the microphone hole 203. A microphone array for detecting a sound and a direction in which the sound is generated or incident may be disposed in the microphone hole 203. The speaker holes 207 and 214 may include an external speaker hole 207 and/or a call receiver hole 214. The speaker hole 207 and the receiver hole 214 may be formed as one hole or individually independent holes. One or more speakers for emitting sound to the outside may be disposed in the speaker hole 207. The audio modules 203, 207, and 214 are not limited to the above-described structure and/or configuration, and according to the structure of the electronic device 200, only some of the audio modules 203, 207, and 214 may be provided, or a new audio module may be added.

The camera modules 205 and 212 may include at least one of a front camera module 205 and/or a rear camera module 212. The front camera module 205 may be disposed on the front surface 210a of the electronic device 200, and the rear camera module 212 may be disposed on the rear surface 210b of the electronic device 200. The camera modules 205 and 212 may include one or more lenses, an image sensor, and/or an image signal processor.

The front camera module 205 may be disposed in a hole area included as at least a portion of the display area, but is not limited thereto and may be disposed outside the display area.

The rear camera module 212 may include various types of cameras. For example, it may be understood that the rear camera module 212 includes heterogeneous camera(s) such as an infrared camera, a telephoto camera, and/or a wide-angle camera. The rear camera module 212 may further include a flash in some cases. The flash may include a light emitting device, such as a light emitting diode (LED) or a xenon lamp.

The rear camera module 212 may include two or more cameras having different specifications. For example, the rear camera module 212 may include a wide-angle camera and/or a telephoto camera. For example, the rear camera module 212 may include a wide-angle camera, an ultra-wide-angle camera, and/or a telephoto camera. For example, the rear camera module 212 may further include an infrared (IR) camera (e.g., a time of flight (TOF) camera or a structured optical camera). The IR camera may operate as at least a portion of the sensor module. For example, the TOF camera may be operated as at least a portion of a sensor module for detecting a distance to a subject. The two or more cameras included in the rear camera module 212 may be disposed close to each other. Although not limited thereto, the two or more cameras may be arranged in a line or may be arranged to be spaced apart from each other at equal intervals.

The input device 217 may be disposed on at least one side surface of the housing 210. The input device 217 disposed on at least one side surface of the housing 210 may be implemented in the form of a hard key. According to an embodiment, the input device 217 may be implemented in the form of a soft key on the display. The input device 217 may include a sensor module disposed on the rear surface 210b of the housing 210.

The connector holes 208 and 209 may include a first connector hole 208 for receiving a connector (e.g., a USB connector) for transmitting/receiving power and/or data to/from an external electronic device and/or a second connector hole 209 (e.g., an earphone jack) for transmitting/receiving audio signals to/from an external electronic device.

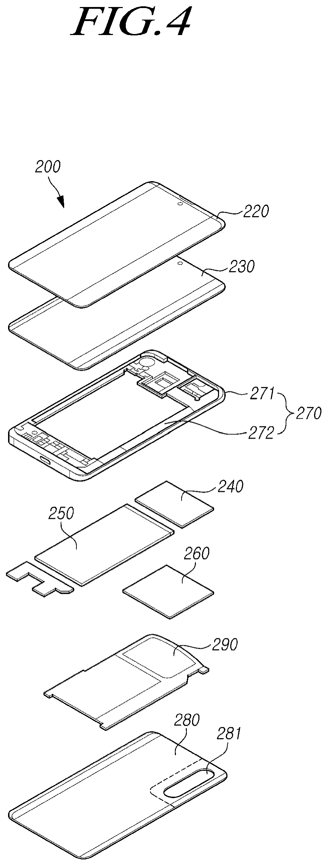

FIG. 4 is an exploded perspective view illustrating an electronic device according to various embodiments of the disclosure.

Referring to FIG. 4, an electronic device 200 may include a supporting bracket 270, a front plate 220, a display 230, a printed circuit board 240, a battery 250, a rear case 260, an antenna 290, and/or a rear plate 280. The supporting bracket 270 of the electronic device 200 may include a side bezel structure 271 and a supporting member 272.

The electronic device 200 may omit at least one of the components or may further include other components. For example, the supporting member 272 and/or the rear case 260 among the components of the electronic device 200 may be omitted. For example, the electronic device 200 may further include a deco film. At least one of the components of the electronic device 200 may be the same as or similar to at least one of the components of the electronic device of FIGS. 2 and 3, and no duplicate description is given.

The supporting member 272 may be disposed inside the electronic device 200 to be connected to the side bezel structure 271 or may be integrally formed with the side bezel structure 271. The supporting member 272 may be formed of, e.g., a metal material and/or a non-metal material (e.g., polymer). The display 230 may be disposed on one surface of the supporting member 272 and the printed circuit board 240 may be disposed on the other surface of the supporting member 272.

One or more processors, one or more memories, and/or interfaces may be disposed on the printed circuit board 240. The processor, the memory, and/or the interface may be the same as or similar to the processor, the memory, and/or the interface of the electronic device of FIG. 1, and no duplicate description is given. The processor, the memory, and/or the interface may be mounted on the printed circuit board 240 in the form of independent electronic components or in the form of an electronic component in which at least one electronic component is integrated.

The battery 250 may be a device for supplying power to at least one component of the electronic device 200. The battery 250 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally disposed inside the electronic device 200. The battery 250 may be detachably disposed with the electronic device 200.

The rear case 260 may be disposed between the printed circuit board 240 and the antenna 290. The rear case 260 may include one surface to which at least one of the printed circuit board 240 or the battery 250 is coupled and/or the other surface to which the antenna 290 is coupled.

The antenna 290 may be disposed between the rear plate 280 and the battery 250. The antenna 290 may include, e.g., a near-field communication (NFC) antenna, a wireless charging antenna, and/or a magnetic secure transmission (MST) antenna. For example, the antenna 290 may perform short-range communication with an external device or may wirelessly transmit and receive power required for charging. An antenna structure may be formed by a portion or a combination of the side bezel structure 271 and/or the supporting member 272.

The rear plate 280 may form at least a portion of the rear surface of the electronic device 200. The rear plate 280 may include an opening 281 for disposing a camera. The opening may be formed at a position where the camera module is disposed. According to an embodiment, "rear plate" may be used interchangeably with "back cover."

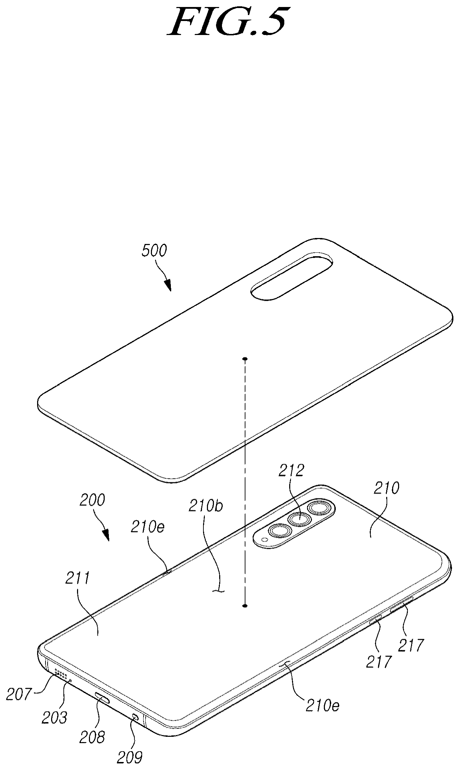

FIG. 5 is a perspective view illustrating an electronic device including a retroreflective structure according to various embodiments of the disclosure.

Referring to FIG. 5, a retroreflective film 500 including a retroreflective structure may be attached to a back cover 211 of an electronic device 200. The retroreflective film 500 may be disposed to cover at least a portion of the back cover 211. The retroreflective film 500 may be bonded to the back cover 211. The retroreflective film 500 includes a retroreflective structure, so the back cover 211 with the retroreflective film 500 attached may implement a retroreflective effect on the rear surface.

The back cover 211 may also include at least a portion of a retroreflective structure. For example, the back cover 211 may include a retroreflective structure as a component. In this case, the retroreflective structure may be formed integrally with the back cover 211, and a separate retroreflective film 500 may not be provided.

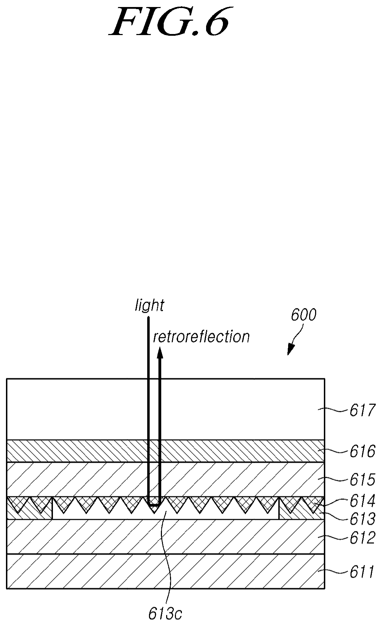

In the following disclosure, a back cover including a retroreflective structure is exemplarily described. In FIGS. 6 to 12, a back cover including a retroreflective structure may include a retroreflective film bonded to one surface or may integrally have a retroreflective structure, and each cross-section may be understood as a cross-section of the back cover or the retroreflective film. For convenience of description, the following disclosure is described on the premise of a back cover, but it is obvious that each cross-section may be understood as relating to a retroreflective film.

FIG. 6 exemplarily illustrates a cross-section of a back cover applicable to an electronic device.

Referring to FIG. 6, a back cover 600 may include a multilayer structure for retroreflection. The multilayer structure for retroreflection may include a shielding print layer 611, a base layer 612, a prism pattern layer 614, a substrate layer 615, a sealing layer 613, and/or a cover layer 617. According to an embodiment, the back cover 600 may include a shielding print layer 611, a base layer 612, a prism pattern layer 614, a substrate layer 615, a sealing layer 613, and/or a cover layer 617. According to an embodiment, at least a portion of the back cover 600 may be omitted, or new layer components may be further included in the back cover 600.

The shielding print layer 611 may be introduced to control the amount and type of light reflected or transmitted by the back cover 600. According to an embodiment, the shielding print layer 611 may also block heat and/or ultraviolet rays from the outside. The shielding print layer 611 may include, e.g., metal materials (e.g., aluminum, silver, copper, chromium, nickel, or alloys thereof), and/or various dyes or pigments, but the disclosure is not limited thereto. The shielding print layer 611 may also include metal oxides, carbonates, or organic compounds for ultraviolet blocking.

The base layer 612 may be disposed on the shielding print layer 611. The base layer 612 provides a basic structure for the multilayer retroreflective structure and may support other layers. The base layer 612 may contain, e.g., polyethylene terephthalate (PET), and the base layer 612 including PET may also be referred to as a PET layer. According to an embodiment, the base layer 612 may include polycarbonate (PC), polypropylene (PP), polyamide (PA), polyvinyl chloride (PVC), polytetrafluoroethylene (PTFE), ethylene tetra fluoro ethylene (ETFE), or polyethylene naphthalate (PEN), but the disclosure is not limited thereto.

The prism pattern layer 614 may be disposed on the base layer 612. The prism pattern layer 614 may include a plurality of micro prisms that generate a retroreflective effect. The micro prisms may protrude in a rear direction (e.g., the -Z-axis direction of FIG. 2). The micro prisms formed in one prism pattern layer 614 may have substantially the same or similar shapes.

The prism pattern layer 614 may be disposed on one surface of the substrate layer 615. For example, the prism pattern layer 614 may be disposed or formed in the rear direction (e.g., the sixth direction (-Z-axis direction)) of the substrate layer 615. In other words, the prism pattern layer 614 may be formed integrally with the substrate layer 615 or formed separately and bonded to the substrate layer 615. In an example, the prism pattern layer 614 may be bonded to the base layer 612 by the sealing layer 613 while bonded to the substrate layer 615. In an example, the prism pattern layer 614 may be bonded to the base layer 612 by the sealing layer 613 while formed integrally with the substrate layer 615.

The sealing layer 613 may bond the base layer 612 and the prism pattern layer 614 to each other. The sealing layer 613 may be positioned between the base layer 612 and the prism pattern layer 614. The sealing layer 613 may be disposed to form an air cell 613c in a space between the base layer 612 and the prism pattern layer 614. To form the air cell 613c, the sealing layer 613 may be disposed in a first area, and the sealing layer 613 may not be disposed in a second area. The second area is positioned between the first areas, and the air cell 613c may be formed across the second area. To implement a retroreflective effect, a refractive index difference of -0.4 or more between media is required in the direction of light propagation. In case of forming the prism pattern layer 614 with UV resin having a refractive index of approximately 1.4 to 1.63, the refractive index difference between air and the prism pattern layer 614 is identified to be -0.4 or more, enabling a retroreflective effect.

The sealing layer 613 may include, e.g., optically clear adhesive (OCA). The OCA may include acrylic adhesives and/or silicone adhesives. The sealing layer 613 may also include UV-curable adhesives, hot-melt adhesives, pressure-sensitive adhesive (PSA), and/or epoxy adhesives.

The cover layer 617 may be disposed on the substrate layer 615. The cover layer 617 is positioned at the outermost side of the back cover 600 and may be exposed to the external environment. The cover layer 617 may be composed of materials having optical transparency. The cover layer 617 may include, e.g., glass, PC, acrylic, PTFE, or ETFE, but the disclosure is not limited thereto. The cover layer 617 may have excellent durability, chemical stability, and optical properties. The cover layer 617 may be bonded to the substrate layer 615 by an adhesive layer 616.

The adhesive layer 616 may include substantially the same or similar components as the sealing layer 613. In an example, the adhesive layer 616, unlike the sealing layer 613, may be disposed across at least a portion of the first area(s) and the second area(s). In an example, the adhesive layer 616 may be disposed to at least partially overlap the sealing layer 613 in the Z-axis direction.

According to an embodiment, in the second area(s) where the sealing layer 613 is disposed, air cells 613c may not be formed, and retroreflective effects may not occur. Therefore, the width of the second area(s) needs to be formed as narrow as possible. However, there is a need to reduce quality issues such as waviness, lifting, warping, and peeling for various layer elements of the back cover 600 (e.g., the prism pattern layer 614, the substrate layer 615, the cover layer 617) that may occur as the width of the second area(s) is decreased.

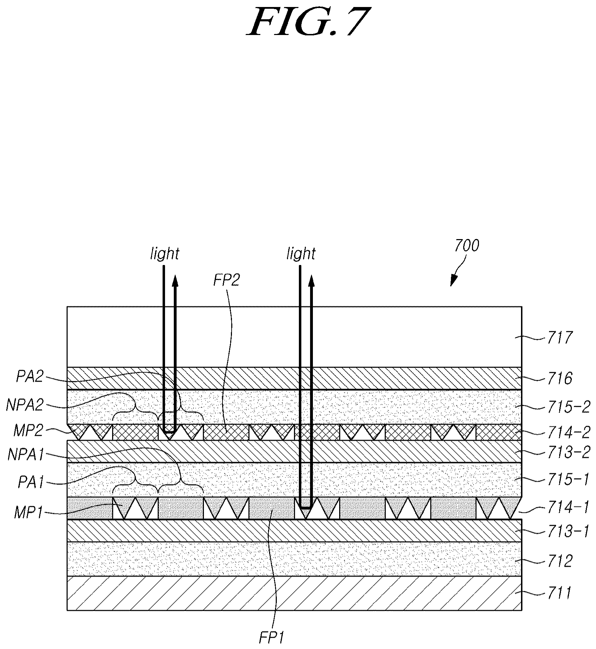

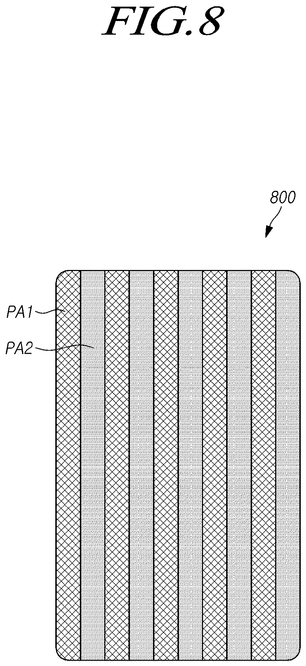

FIG. 7 is a cross-sectional view illustrating a back cover including a multilayer retroreflective structure according to various embodiments of the disclosure. FIG. 8 is a front view illustrating a back cover including a multilayer retroreflective structure according to various embodiments of the disclosure.

Referring to FIG. 7, a back cover 700, 800 may include a multilayer retroreflective structure. The multilayer retroreflective structure may include two or more prism pattern layers 714-1, 714-2. The multilayer retroreflective structure may include a shielding print layer 711, a base layer 712, two or more prism pattern layers 714-1, 714-2, two or more substrate layers 715-1, 715-2, and/or a cover layer 717. According to an embodiment, the back cover 700, 800 may include a shielding print layer 711, a base layer 712, two or more prism pattern layers 714-1, 714-2, two or more substrate layers 715-1, 715-2, and/or a cover layer 717. According to an embodiment, at least a portion of the back cover 700, 800 may be omitted, or new layer components may be further included in the back cover 700, 800.

The shielding print layer 711 may be introduced to control the amount and type of light reflected or transmitted by the back cover 700, 800. According to an embodiment, the shielding print layer 711 may also block heat and/or ultraviolet rays from the outside. The shielding print layer 711 may include, e.g., metal materials (e.g., aluminum, silver, copper, chromium, nickel, or alloys thereof), and/or various dyes or pigments, but the disclosure is not limited thereto. The shielding print layer 711 may also include metal oxides, carbonates, or organic compounds for ultraviolet blocking.

The base layer 712 may be disposed on the shielding print layer 711. The base layer 712 provides a basic structure for the multilayer retroreflective structure and may support other layers. The base layer 712 may contain, e.g., PET, and the base layer 712 including PET may also be referred to as a PET layer. According to an embodiment, the base layer may include PC, PP, PA, PVC, PTFE, ETFE, or PEN, but the disclosure is not limited thereto.

The two or more prism pattern layers 714-1, 714-2 may be disposed on the base layer 712. The two or more prism pattern layers 714-1, 714-2 may include a first prism pattern layer 714-1 and a second prism pattern layer 714-2. The second prism pattern layer 714-2 may be disposed relatively above the first prism pattern layer 714-1. The second prism pattern layer 714-2 may be disposed above the first prism pattern layer 714-1 based on the vertical direction. The first prism pattern layer 714-1 and the second prism pattern layer 714-2 may be separated from each other along the vertical direction. According to an embodiment, the first prism pattern layer 714-1 may be referred to as a "lower prism pattern layer," and the second prism pattern layer 714-2 may be referred to as an "upper prism pattern layer."

The prism pattern layers 714-1, 714-2 may include a plurality of micro prisms MP1, MP2 that generate a retroreflective effect. The micro prisms MP1, MP2 may protrude in the rear direction (e.g., the -Z-axis direction of FIG. 2).

The micro prisms MP1, MP2 formed in one prism pattern layer (e.g., the first prism pattern layer 714-1, the second prism pattern layer 714-2) may have substantially the same or similar shapes. For example, first micro prisms MP1 formed in the first prism pattern layer 714-1 may have substantially the same or similar shapes. For example, second micro prisms MP2 formed in the second prism pattern layer 714-2 may have substantially the same or similar shapes. According to an embodiment, the first micro prism MP1 may be referred to as a "lower micro prism," and the second micro prism MP2 may be referred to as an "upper micro prism." According to an embodiment, unlike illustrated in FIG. 7, the positions of the first micro prism MP1 and the second micro prism MP2 may be switched vertically.

The micro prisms MP1, MP2 (e.g., the first micro prism MP1, the second micro prism MP2) formed in different prism pattern layers 714-1, 714-2 (e.g., the first prism pattern layer 714-1, the second prism pattern layer 714-2) may have different shapes from each other, but the disclosure is not limited thereto. For example, the first micro prism MP1 and the second micro prism MP2 may have different shapes from each other. For example, the first micro prism MP1 and the second micro prism MP2 may have substantially the same or similar shapes.

The first micro prism MP1 may have substantially the same or larger dimension compared to the second micro prism MP2. For example, the first micro prism MP1 may have a greater thickness (or height) in the vertical direction (e.g., including the Z-axis direction of FIG. 2) than the second micro prism MP2. As the vertical thickness of the micro prisms MP1, MP2 increases, the optical path in the prism pattern layers 714-1, 714-2 may be extended. As the optical path extends, the micro prisms MP1, MP2 may have higher reflection efficiency. Thus, as the first micro prism MP1 has a greater thickness in the vertical direction compared to the second micro prism MP2, the first micro prism MP1 may have greater reflection efficiency. The relatively high reflection efficiency of the first micro prism MP1 may compensate for the optical performance of the first micro prism MP1 that may differ from the second micro prism MP2 due to being positioned farther from the cover layer 717 compared to the second micro prism MP2, and may make the boundary between the first micro prism MP1 and the second micro prism MP2 invisible.

The first micro prism MP1 may have substantially the same or narrower width in the horizontal direction (e.g., including the X-axis direction or Y-axis direction of FIG. 2) compared to the second micro prism MP2. In an example, the widths of the first micro prism MP1 and the second micro prism MP2 are substantially the same, and the reflection efficiency by the first micro prism MP1 and the second micro prism MP2 may be adjusted through the thickness of the first micro prism MP1 and/or the second micro prism MP2. In an example, by designing the width of the first micro prism MP1 to be narrower compared to the second micro prism MP2, the difference in reflection efficiency with the second micro prism MP2 that occurs as the first micro prism MP1 is positioned farther from the cover layer 717 may be compensated.

The first micro prism MP1 and the second micro prism MP2 may have substantially the same or similar shapes. By having the first micro prism MP1 and the second micro prism MP2 have substantially the same or similar shapes, the complexity of the manufacturing process may be improved.

The first prism pattern layer 714-1 may have a greater thickness (or height) in the vertical direction (e.g., including the Z-axis direction of FIG. 2) than the second prism pattern layer 714-2. As the thickness of the first prism pattern layer 714-1 becomes greater than the thickness of the second prism pattern layer 714-2, the first micro prism MP1 may be formed with a greater thickness than the second micro prism MP2.

In an example, at least one of the first micro prism MP1 and the second micro prism MP2 may be related to the thickness of the first prism pattern layer 714-1 and the second prism pattern layer 714-2. For example, the first micro prism MP1 (or the second micro prism MP2) may have a thickness of a specified ratio (e.g., at least 50%, at least 60%, at least 70%, at least 80%, at least 90%, at least 95%, or 100%) of the first prism pattern layer 714-1 (or the second prism pattern layer 714-2). For example, the first micro prism MP1 (or the second micro prism MP2) may have a thickness substantially the same as or smaller than the thickness of the first prism pattern layer 714-1 (the second prism pattern layer 714-2).

In an example, the two or more prism pattern layers 714-1, 714-2 (e.g., including at least one of the first prism pattern layer 714-1, the second prism pattern layer 714-2) may have a specified thickness regardless of the thickness of two or more micro prisms MP1, MP2 (e.g., including at least one of the first micro prism MP1, the second micro prism MP2).

The two or more prism pattern layers 714-1, 714-2 may include patterned areas PA1, PA2 and non-patterned areas NPA1, NPA2. The first prism pattern layer 714-1 may include a first patterned area PA1 and a first non-patterned area NPA1. The second prism pattern layer 714-2 may include a second patterned area PA2 and a second non-patterned area NPA2.

One or more micro prisms MP1, MP2 (e.g., the first micro prism MP1, the second micro prism MP2) may be formed or disposed in the patterned areas PA1, PA2 (e.g., including the first patterned area PA1, the second patterned area PA2). The first micro prism MP1 may be disposed or formed in the first patterned area PA1 of the first prism pattern layer 714-1. The second micro prism MP2 may be disposed or formed in the second patterned area PA2 of the second prism pattern layer 714-2.

The micro prisms MP1, MP2 may not be formed or disposed in the non-patterned areas NPA1, NPA2 (including the first non-patterned area NPA1, the second non-patterned area NPA2). Flat portions FP1, FP2 (e.g., a first flat portion FP1, a second flat portion FP2) may be formed or disposed in the non-patterned areas NPA1, NPA2. The flat portions FP1, FP2 may have a constant thickness along the horizontal direction. The first flat portion FP1 may be disposed or formed in the first non-patterned area NPA1 of the first prism pattern layer 714-1. The second flat portion FP2 may be disposed or formed in the second non-patterned area NPA2 of the second prism pattern layer 714-2.

The two or more prism pattern layers 714-1, 714-2 (e.g., including the first prism pattern layer 714-1, the second prism pattern layer 714-2) may be disposed or formed on one surface of corresponding substrate layers 715-1, 715-2 (e.g., including the first substrate layer 715-1, the first substrate layer 715-1). For example, the two or more prism pattern layers 714-1, 714-2 may be disposed or formed in the rear direction of the corresponding substrate layers 715-1, 715-2. In other words, the two or more prism pattern layers 714-1, 714-2 may be formed integrally with the corresponding substrate layers 715-1, 715-2, or formed separately and bonded to the substrate layers 715-1, 715-2.

The substrate layers 715-1, 715-2 may include a first substrate layer 715-1 and/or a second substrate layer 715-2. The first substrate layer 715-1 may correspond to the first prism pattern layer 714-1, and the second substrate layer 715-2 may correspond to the second prism pattern layer 714-2. The first prism pattern layer 714-1 may be disposed or formed in the rear direction of the first substrate layer 715-1. The second prism pattern layer 714-2 may be disposed or formed in the rear direction of the second substrate layer 715-2. Accordingly, the first prism pattern layer 714-1 may be disposed on the rear surface of the first substrate layer 715-1, and the second prism pattern layer 714-2 may be disposed on the rear surface of the second substrate layer 715-2.

The adhesive layers 713-1, 713-2, 716 may be disposed in the front direction of the base layer 712, the first substrate layer 715-1, and/or the second substrate layer 715-2. The adhesive layers 713-1, 713-2, 716 may include a first adhesive layer 713-1 disposed in the front direction of the base layer 712, a second adhesive layer 713-2 disposed in the front direction of the first substrate layer 715-1, and a third adhesive layer 716 disposed in the front direction of the second substrate layer 715-2. Here, the adhesive layers 713-1, 713-2, 716 (e.g., including the first adhesive layer 713-1, the second adhesive layer 713-2, and/or the third adhesive layer 716) may include, e.g., OCA. The OCA may include acrylic adhesives and/or silicone adhesives. The adhesive layers 713-1, 713-2, 716 may also include UV-curable adhesives, hot-melt adhesives, PSA, and/or epoxy adhesives.

The first prism pattern layer 714-1 may be bonded to the base layer 712 while bonded to the first substrate layer 715-1. The first prism pattern layer 714-1 and the base layer 712 may be bonded to each other by the first adhesive layer 713-1. The front surface of the first prism pattern layer 714-1 may directly contact the rear surface of the first substrate layer 715-1. The rear surface of the first prism pattern layer 714-2 may be bonded to the front surface of the base layer 712 by the first adhesive layer 713-1.

Across the first patterned area PA1 and the first non-patterned area NPA1, the front surface of the first prism pattern layer 714-1 may be bonded to the rear surface of the first substrate layer 715-1. In the first non-patterned area NPA1, the first prism pattern layer 714-1 may be bonded to the base layer 712 by the first adhesive layer 713-1. By surface contact between the first flat portion FP1 and the base layer 712, the first prism pattern layer 714-1 and the base layer 712 may be bonded to each other, and in the bonded state, the first micro prism MP1 may form an air cell with the base layer 712.

The second prism pattern layer 714-2 may be bonded to the first substrate layer 715-1 while bonded to the second substrate layer 715-2. The second prism pattern layer 714-2 and the first substrate layer 715-1 may be bonded to each other by the second adhesive layer 713-2. The front surface of the second prism pattern layer 714-2 may directly contact the rear surface of the second substrate layer 715-2. The rear surface of the second prism pattern layer 714-2 may be bonded to the front surface of the first substrate layer 715-1 by the second adhesive layer 713-2.

Across the second patterned area PA2 and the second non-patterned area NPA2, the front surface of the second prism pattern layer 714-2 may be bonded to the rear surface of the second substrate layer 715-2. In the second non-patterned area NPA2, the second prism pattern layer 714-2 may be bonded to the first substrate layer 715-1 by the second adhesive layer 713-2. By surface contact between the second flat portion FP2 and the first substrate layer 715-1, the second prism pattern layer 714-2 and the first substrate layer 715-1 may be bonded to each other, and in the bonded state, the second micro prism MP2 may form an air cell with the first substrate layer 715-1.

In the non-patterned areas NPA1, NPA2 (e.g., the first non-patterned area NPA1, the second non-patterned area NPA2), the vertical thickness of the flat portions (e.g., including the first flat portion FP1, the second flat portion FP2) may be the maximum vertical thickness of the prism pattern layers 714-1, 714-2. For example, the maximum thickness of the first prism pattern layer 714-1 may be substantially the same as the thickness of the first flat portion FP1. For example, the maximum thickness of the second prism pattern layer 714-2 may be substantially the same as the thickness of the second flat portion FP2.

According to an embodiment, the prism pattern layers 714-1, 714-2 may have various thicknesses corresponding to the shape of the micro prisms MP1, MP2 in the patterned areas PA1, PA2 due to the micro prisms MP1, MP2. In the patterned areas PA1, PA2, the vertical thickness of the micro prisms MP1, MP2 may be substantially the same as or smaller than the maximum thickness of the prism pattern layers 714-1, 714-2. For example, the maximum thickness of the first prism pattern layer 714-1 may be substantially the same as or greater than the maximum thickness of the first micro prism MP1. For example, the maximum thickness of the second prism pattern layer 714-2 may be substantially the same as or greater than the maximum thickness of the second micro prism MP2.

In the first non-patterned area NPA1, the first prism pattern layer 714-1 is physically bonded to the base layer 712 through the first adhesive layer 713-1, and in the first patterned area PA1, the first prism pattern layer 714-1 may be spaced apart from the first adhesive layer 713-1 and/or the base layer 712 in the vertical direction. An air cell may be formed in the spaced space between the first prism pattern layer 714-1 and the base layer 712 in the first patterned area PA1. As the air cell is formed, retroreflection may occur in the first patterned area PA1.

In the second non-patterned area NPA2, the second prism pattern layer 714-2 is physically bonded to the first substrate layer 715-1 through the second adhesive layer 713-2, and in the second patterned area PA2, the second prism pattern layer 714-2 may be spaced apart from the second adhesive layer 713-2 and/or the first substrate layer 715-1 in the vertical direction. An air cell may be formed in the spaced space between the second prism pattern layer 714-2 and the first substrate layer 715-1 in the second patterned area PA2. As the air cell is formed, retroreflection may occur in the second patterned area PA2.

In the first non-patterned area NPA1, the first prism pattern layer 714-1 is bonded to the base layer 712 positioned in the rear direction, and accordingly, in the first non-patterned area NPA1, the first prism pattern layer 714-1 may not form an air cell. In the second non-patterned area NPA2, the second prism pattern layer 714-2 is bonded to the first substrate layer 715-1 positioned in the rear direction, and accordingly, in the second non-patterned area NPA2, the second prism pattern layer 714-2 may not form an air cell. Retroreflection in the non-patterned areas NPA1, NPA2 (e.g., the first non-patterned area NPA1, the second non-patterned area NPA2) of the first prism pattern layer 714-1 and/or the second prism pattern layer 714-2 that do not form air cells may be compensated in the patterned areas PA1, PA2 (e.g., the second patterned area PA2, the first patterned area PA1) of other prism pattern layers 714-1, 714-2 designated to overlap that area.

According to an embodiment, referring to FIGS. 7 and 8, the first patterned area PA1 (or the second patterned area PA2) and the first non-patterned area NPA1 (or the second non-patterned area NPA2) may be alternately positioned along the horizontal direction (e.g., either the X-axis direction or Y-axis direction of FIG. 2). As the first patterned area PA1 (or the second patterned area PA2) and the first non-patterned area NPA1 (or the second non-patterned area NPA2) are alternately positioned, air cells formed corresponding to the first patterned area PA1 (or the second patterned area PA2) may also be alternately formed along the horizontal direction. The air cells may be positioned between the first non-patterned areas NPA1 (or the second non-patterned areas NPA2).

The patterned areas PA1, PA2 of either the first prism pattern layer 714-1 or the second prism pattern layer 714-2 may at least partially overlap the non-patterned areas NPA1, NPA2 of the other prism pattern layers 714-1, 714-2. For example, the first patterned area PA1 and the second non-patterned area NPA2 may at least partially overlap along the vertical direction (e.g., the Z-axis direction of FIG. 2). Light incident vertically through the second non-patterned area NPA2 may be retroreflected by the first micro prism MP1 positioned in the first patterned area PA1. For example, the second patterned area PA2 and the first non-patterned area NPA1 may at least partially overlap along the vertical direction. Light incident vertically through the second non-patterned area NPA2 may be retroreflected by the second micro prism MP2 positioned in the second patterned area PA2.

The width along the horizontal direction of the patterned areas PA1, PA2 of either the first prism pattern layer 714-1 or the second prism pattern layer 714-2 may be substantially identical or similar to the width along the horizontal direction of the non-patterned areas NPA1, NPA2 of the other prism pattern layers 714-1, 714-2. For example, the width along the horizontal direction of the first patterned area PA1 may be substantially identical or similar to the width along the horizontal direction of the second non-patterned area NPA2. For example, the width along the horizontal direction of the second patterned area PA2 may be substantially identical or similar to the width along the horizontal direction of the first non-patterned area NPA1. Accordingly, in case that the back cover 700, 800 with the first prism pattern layer 714-1 and the second prism pattern layer 714-2 stacked is viewed from above (e.g., in case of being viewed in the vertical direction), the boundary between the first patterned area PA1 and the second patterned area PA2 may be almost invisible.

The width along the horizontal direction of the patterned areas PA1, PA2 of either the first prism pattern layer 714-1 or the second prism pattern layer 714-2 may be substantially identical or similar to the width along the horizontal direction of the patterned areas PA1, PA2 of the other prism pattern layers 714-1, 714-2. For example, the width along the horizontal direction of the first patterned area PA1 may be substantially identical or similar to the width along the horizontal direction of the second patterned area PA2.

The width along the horizontal direction of the patterned areas PA1, PA2 of the prism pattern layers 714-1, 714-2 (e.g., the first prism pattern layer 714-1, or the second prism pattern layer 714-2) may be substantially identical or similar to the width along the horizontal direction of the non-patterned areas NPA1, NPA2. For example, the width along the horizontal direction of the first patterned area PA1 may be substantially identical or similar to the width along the horizontal direction of the first non-patterned area NPA1. For example, the width along the horizontal direction of the second patterned area PA2 may be substantially identical or similar to the width along the horizontal direction of the second non-patterned area NPA2. By balancing the horizontal width of the patterned areas PA1, PA2 and the horizontal width of the non-patterned areas NPA1, NPA2, the bonding force between the prism pattern layers 714-1, 714-2 and other layers in the non-patterned areas NPA1, NPA2 may be appropriately maintained, and bonding defects such as peeling, lifting, and waviness may be decreased.

The cover layer 717 may be disposed on the two or more prism pattern layers 714-1, 714-2. For example, the cover layer 717 may be disposed on the second prism pattern layer 714-2 positioned higher among the two or more prism pattern layers 714-1, 714-2. For example, the cover layer 717 may be disposed on the second substrate layer 715-2 bonded to the second prism pattern layer 714-2.

The cover layer 717 is positioned at the outermost side of the back cover 700, 800 and may be exposed to the external environment. The cover layer 717 may be composed of materials having optical transparency. The cover layer 717 may include, e.g., glass, PC, acrylic, PTFE, or ETFE, but the disclosure is not limited thereto. The cover layer 717 may have excellent durability, chemical stability, and optical properties. The cover layer 717 may be bonded to the second substrate layer 715-2 by the third adhesive layer 716. The cover layer 717 may be disposed across at least a portion or all of the patterned areas PA1, PA2 (e.g., including the first patterned area PA1 or the second patterned area PA2) and/or the non-patterned areas NPA1, NPA2 (e.g., including the first non-patterned area NPA1 or the second non-patterned area NPA2), and may be bonded to the second substrate layer 715-2.

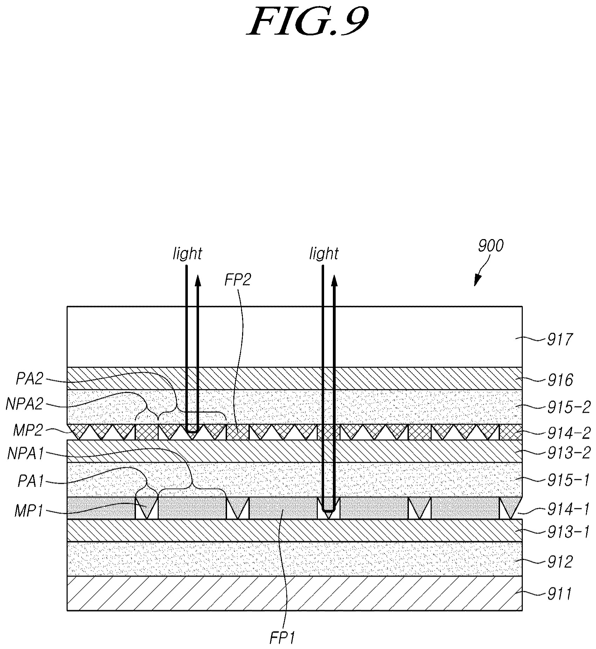

FIG. 9 is a cross-sectional view illustrating a back cover including a multilayer retroreflective structure according to various embodiments of the disclosure.

Referring to FIG. 9, a back cover 900 may include a multilayer retroreflective structure. The multilayer retroreflective structure may include two or more prism pattern layers 914-1, 914-2. The multilayer retroreflective structure may include a shielding print layer 911, a base layer 912, two or more prism pattern layers 914-1, 914-2, two or more substrate layers 915-1, 915-2, and/or a cover layer 917. According to an embodiment, the back cover 900 may include a shielding print layer 911, a base layer 912, the two or more prism pattern layers 914-1, 914-2, two or more substrate layers 915-1, 915-2, and/or a cover layer 917. According to an embodiment, at least a portion of the back cover 900 may be omitted, or new layer components may be further included in the back cover 900.

The shielding print layer 911 may be introduced to control the amount and type of light reflected or transmitted by the back cover 900. According to an embodiment, the shielding print layer 911 may also block heat and/or ultraviolet rays from the outside. The shielding print layer 911 may include, e.g., metal materials (e.g., aluminum, silver, copper, chromium, nickel, or alloys thereof), and/or various dyes or pigments, but the disclosure is not limited thereto. The shielding print layer 911 may also include metal oxides, carbonates, or organic compounds for ultraviolet blocking.

The base layer 912 may be disposed on the shielding print layer 911. The base layer 912 provides a basic structure for the multilayer retroreflective structure and may support other layers. The base layer 912 may contain, e.g., PET, and the base layer 912 including PET may also be referred to as a PET layer. According to an embodiment, the base layer 912 may include PC, PP, PA, PVC, PTFE, ETFE, or PEN, but the disclosure is not limited thereto.

The two or more prism pattern layers 914-1, 914-2 may be disposed on the base layer 912. The two or more prism pattern layers 914-1, 914-2 may include a first prism pattern layer 914-1 and a second prism pattern layer 914-2. The second prism pattern layer 914-2 may be disposed relatively above the first prism pattern layer 914-1. The second prism pattern layer 914-2 may be disposed above the first prism pattern layer 914-1 based on the vertical direction. The first prism pattern layer 914-1 and the second prism pattern layer 914-2 may be separated from each other along the vertical direction.

The prism pattern layers 914-1, 914-2 may include a plurality of micro prisms MP1, MP2 that generate a retroreflective effect. The micro prisms MP1, MP2 may protrude in the rear direction (e.g., the -Z-axis direction of FIG. 2).

The micro prisms MP1, MP2 formed in one prism pattern layer 914-1, 914-2 may have substantially the same or similar shapes. For example, first micro prisms MP1 formed in the first prism pattern layer 914-1 may have substantially the same or similar shapes. For example, second micro prisms MP2 formed in the second prism pattern layer 914-2 may have substantially the same or similar shapes.

The micro prisms MP1, MP2 (e.g., the first micro prism MP1, the second micro prism MP2) formed in different prism pattern layers 914-1, 914-2 (e.g., the first prism pattern layer 914-1, the second prism pattern layer 914-2) may have different shapes from each other, but the disclosure is not limited thereto. For example, the first micro prism MP1 and the second micro prism MP2 may have different shapes from each other. For example, the first micro prism MP1 and the second micro prism MP2 may have substantially the same or similar shapes.

The first micro prism MP1 may have substantially the same or larger dimension compared to the second micro prism MP2. For example, the first micro prism MP1 may have a greater thickness (or height) in the vertical direction (e.g., including the Z-axis direction of FIG. 2) than the second micro prism MP2. As the vertical thickness of the micro prisms MP1, MP2 increases, the optical path in the prism pattern layers 914-1, 914-2 may be extended. As the optical path extends, the micro prisms MP1, MP2 may have higher reflection efficiency. Thus, as the first micro prism MP1 has a greater thickness in the vertical direction compared to the second micro prism MP2, the first micro prism MP1 may have greater reflection efficiency. The relatively high reflection efficiency of the first micro prism MP1 may compensate for the optical performance of the first micro prism MP1 that may differ from the second micro prism MP2 due to being positioned farther from the cover layer 917 compared to the second micro prism MP2, and may make the boundary between the first micro prism MP1 and the second micro prism MP2 invisible.

The first micro prism MP1 may have substantially the same or narrower width in the horizontal direction (e.g., including the X-axis direction or Y-axis direction of FIG. 2) compared to the second micro prism MP2. In an example, the widths of the first micro prism MP1 and the second micro prism MP2 are substantially the same, and the reflection efficiency by the first micro prism MP1 and the second micro prism MP2 may be adjusted through the thickness of the first micro prism MP1 and/or the second micro prism MP2. In an example, by designing the width of the first micro prism MP1 to be narrower compared to the second micro prism MP2, the difference in reflection efficiency with the second micro prism MP2 that occurs as the first micro prism MP1 is positioned farther from the cover layer 917 may be compensated.

The first micro prism MP1 and the second micro prism MP2 may have substantially the same or similar shapes. By having the first micro prism MP1 and the second micro prism MP2 have substantially the same or similar shapes, the complexity of the manufacturing process may be improved.

The first prism pattern layer 914-1 may have a greater thickness (or height) in the vertical direction than the second prism pattern layer 914-2. As the thickness of the first prism pattern layer 914-1 becomes greater than the thickness of the second prism pattern layer 914-2, the first micro prism MP1 may be formed with a greater thickness than the second micro prism MP2.

In an example, at least one of the first micro prism MP1 and the second micro prism MP2 may be related to the thickness of the first prism pattern layer 914-1 and the second prism pattern layer 914-2. For example, the first micro prism MP1 (or the second micro prism MP2) may have a thickness of a specified ratio (e.g., at least 50%, at least 60%, at least 70%, at least 80%, at least 90%, at least 95%, or 100%) of the first prism pattern layer 914-1 (or the second prism pattern layer 914-2). For example, the first micro prism MP1 (or the second micro prism MP2) may have a thickness substantially the same as or smaller than the thickness of the first prism pattern layer 914-1 (the second prism pattern layer 914-2).

In an example, the two or more prism pattern layers 914-1, 914-2 (e.g., including at least one of the first prism pattern layer 914-1, the second prism pattern layer 914-2) may have a specified thickness regardless of the thickness of two or more micro prisms MP1, MP2 (e.g., including at least one of the first micro prism MP1, the second micro prism MP2).

The two or more prism pattern layers 914-1, 914-2 may include patterned areas PA1, PA2 and non-patterned areas NPA1, NPA2. The first prism pattern layer 914-1 may include a first patterned area PA1 and a first non-patterned area NPA1. The second prism pattern layer 914-2 may include a second patterned area PA2 and a second non-patterned area NPA2.

One or more micro prisms MP1, MP2 (e.g., the first micro prism MP1, the second micro prism MP2) may be formed or disposed in the patterned areas PA1, PA2 (e.g., including the first patterned area PA1, the second patterned area PA2). The first micro prism MP1 may be disposed or formed in the first patterned area PA1 of the first prism pattern layer 914-1. The second micro prism MP2 may be disposed or formed in the second patterned area PA2 of the second prism pattern layer 914-2.

The micro prisms MP1, MP2 may not be formed or disposed in the non-patterned areas NPA1, NPA2 (including the first non-patterned area NPA1, the second non-patterned area NPA2). Flat portions FP1, FP2 (e.g., a first flat portion FP1, a second flat portion FP2) may be formed or disposed in the non-patterned areas NPA1, NPA2. The flat portions FP1, FP2 may have a constant thickness along the horizontal direction. The first flat portion FP1 may be disposed or formed in the first non-patterned area NPA1 of the first prism pattern layer 914-1. The second flat portion FP2 may be disposed or formed in the second non-patterned area NPA2 of the second prism pattern layer 914-2.

The two or more prism pattern layers 914-1, 914-2 (e.g., including the first prism pattern layer 914-1, the second prism pattern layer 914-2) may be disposed or formed on one surface of corresponding substrate layers 915-1, 915-2 (e.g., including the first substrate layer 915-1, the first substrate layer 915-1). For example, the two or more prism pattern layers 914-1, 914-2 may be disposed or formed in the rear direction of the corresponding substrate layers 915-1, 915-2. In other words, the two or more prism pattern layers 914-1, 914-2 may be formed integrally with the corresponding substrate layers 915-1, 915-2, or formed separately and bonded to the substrate layers 915-1, 915-2.

The substrate layers 915-1, 915-2 may include a first substrate layer 915-1 and/or a second substrate layer 915-2. The first substrate layer 915-1 may correspond to the first prism pattern layer 914-1, and the second substrate layer 915-2 may correspond to the second prism pattern layer 914-2. The first prism pattern layer 914-1 may be disposed or formed in the rear direction of the first substrate layer 915-1. The second prism pattern layer 914-2 may be disposed or formed in the rear direction of the second substrate layer 915-2. Accordingly, the first prism pattern layer 914-1 may be disposed on the rear surface of the first substrate layer 915-1, and the second prism pattern layer 914-2 may be disposed on the rear surface of the second substrate layer 915-2.

The adhesive layers 913-1, 913-2, 916 may be disposed in the front direction of the base layer 912, the first substrate layer 915-1, and/or the second substrate layer 915-2. The adhesive layers 913-1, 913-2, 916 may include a first adhesive layer 913-1 disposed in the front direction of the base layer 912, a second adhesive layer 913-2 disposed in the front direction of the first substrate layer 915-1, and a third adhesive layer 916 disposed in the front direction of the second substrate layer 915-2. Here, the adhesive layers 913-1, 913-2, 916 (e.g., including the first adhesive layer 913-1, the second adhesive layer 913-2, and/or the third adhesive layer 916) may include, e.g., OCA. The OCA may include acrylic adhesives and/or silicone adhesives. The adhesive layers 913-1, 913-2, 916 may also include UV-curable adhesives, hot-melt adhesives, PSA, and/or epoxy adhesives.

The first prism pattern layer 914-1 may be bonded to the base layer 912 while bonded to the first substrate layer 915-1. The first prism pattern layer 914-1 and the base layer 912 may be bonded to each other by the first adhesive layer 913-1. The front surface of the first prism pattern layer 914-1 may directly contact the rear surface of the first substrate layer 915-1. The rear surface of the first prism pattern layer 914-2 may be bonded to the front surface of the base layer 912 by the first adhesive layer 913-1.

Across the first patterned area PA1 and the first non-patterned area NPA1, the front surface of the first prism pattern layer 914-1 may be bonded to the rear surface of the first substrate layer 915-1. In the first non-patterned area NPA1, the first prism pattern layer 914-1 may be bonded to the base layer 912 by the first adhesive layer 913-1. By surface contact between the first flat portion FP1 and the base layer 912, the first prism pattern layer 914-1 and the base layer 912 may be bonded to each other, and in the bonded state, the first micro prism MP1 may form an air cell with the base layer 912.

The second prism pattern layer 914-2 may be bonded to the first substrate layer 915-1 while bonded to the second substrate layer 915-2. The second prism pattern layer 914-2 and the first substrate layer 915-1 may be bonded to each other by the second adhesive layer 913-2. The front surface of the second prism pattern layer 914-2 may directly contact the rear surface of the second substrate layer 915-2. The rear surface of the second prism pattern layer 914-2 may be bonded to the front surface of the first substrate layer 915-1 by the second adhesive layer 913-2.

Across the second patterned area PA2 and the second non-patterned area NPA2, the front surface of the second prism pattern layer 914-2 may be bonded to the rear surface of the second substrate layer 915-2. In the second non-patterned area NPA2, the second prism pattern layer 914-2 may be bonded to the first substrate layer 915-1 by the second adhesive layer 913-2. By surface contact between the second flat portion FP2 and the first substrate layer 915-1, the second prism pattern layer 914-2 and the first substrate layer 915-1 may be bonded to each other, and in the bonded state, the second micro prism MP2 may form an air cell with the first substrate layer 915-1.

In the non-patterned areas NPA1, NPA2 (e.g., the first non-patterned area NPA1, the second non-patterned area NPA2), the vertical thickness of the flat portions (e.g., including the first flat portion FP1, the second flat portion FP2) may be the maximum vertical thickness of the prism pattern layers 914-1, 914-2. For example, the maximum thickness of the first prism pattern layer 914-1 may be substantially the same as the thickness of the first flat portion FP1. For example, the maximum thickness of the second prism pattern layer 914-2 may be substantially the same as the thickness of the second flat portion FP2.

According to an embodiment, the prism pattern layers 914-1, 914-2 may have various thicknesses corresponding to the shape of the micro prisms MP1, MP2 in the patterned areas PA1, PA2 due to the micro prisms MP1, MP2. In the patterned areas PA1, PA2, the vertical thickness of the micro prisms MP1, MP2 may be substantially the same as or smaller than the maximum thickness of the prism pattern layers 914-1, 914-2. For example, the maximum thickness of the first prism pattern layer 914-1 may be substantially the same as or greater than the maximum thickness of the first micro prism MP1. For example, the maximum thickness of the second prism pattern layer 914-2 may be substantially the same as or greater than the maximum thickness of the second micro prism MP2.

In the first non-patterned area NPA1, the first prism pattern layer 914-1 is physically bonded to the base layer 912 through the first adhesive layer 913-1, and in the first patterned area PA1, the first prism pattern layer 914-1 may be spaced apart from the first adhesive layer 913-1 and/or the base layer 912 in the vertical direction. An air cell may be formed in the spaced space between the first prism pattern layer 914-1 and the base layer 912 in the first patterned area PA1. As the air cell is formed, retroreflection may occur in the first patterned area PA1.

In the second non-patterned area NPA2, the second prism pattern layer 914-2 is physically bonded to the first substrate layer 915-1 through the second adhesive layer 913-2, and in the second patterned area PA2, the second prism pattern layer 914-2 may be spaced apart from the second adhesive layer 913-2 and/or the first substrate layer 915-1 in the vertical direction. An air cell may be formed in the spaced space between the second prism pattern layer 914-2 and the first substrate layer 915-1 in the second patterned area PA2. As the air cell is formed, retroreflection may occur in the second patterned area PA2.

In the first non-patterned area NPA1, the first prism pattern layer 914-1 is bonded to the base layer 912 positioned in the rear direction, and accordingly, in the first non-patterned area NPA1, the first prism pattern layer 914-1 may not form an air cell. In the second non-patterned area NPA2, the second prism pattern layer 914-2 is bonded to the first substrate layer 915-1 positioned in the rear direction, and accordingly, in the second non-patterned area NPA2, the second prism pattern layer 914-2 may not form an air cell. Retroreflection in the non-patterned areas NPA1, NPA2 (e.g., the first non-patterned area NPA1, the second non-patterned area NPA2) of the first prism pattern layer 914-1 and/or the second prism pattern layer 914-2 that do not form air cells may be compensated in the patterned areas PA1, PA2 (e.g., the second patterned area PA2, the first patterned area PA1) of other prism pattern layers 914-1, 914-2 designated to overlap that area.

The first patterned area PA1 (or the second patterned area PA2) and the first non-patterned area NPA1 (or the second non-patterned area NPA2) may be alternately positioned along the horizontal direction. As the first patterned area PA1 (or the second patterned area PA2) and the first non-patterned area NPA1 (the second non-patterned area NPA2) are alternately positioned, air cells formed corresponding to the first patterned area PA1 (or the second patterned area PA2) may also be alternately formed along the horizontal direction. The air cells may be positioned between the first non-patterned areas NPA1 (or the second non-patterned areas NPA2).

The patterned areas PA1, PA2 of either the first prism pattern layer 914-1 or the second prism pattern layer 914-2 may at least partially overlap the non-patterned areas NPA1, NPA2 of the other prism pattern layers 914-1, 914-2. For example, the first patterned area PA1 and the second non-patterned area NPA2 may at least partially overlap along the vertical direction (e.g., the Z-axis direction). Light incident vertically through the second non-patterned area NPA2 may be retroreflected by the first micro prism MP1 positioned in the first patterned area PA1. For example, the second patterned area PA2 and the first non-patterned area NPA1 may at least partially overlap along the vertical direction. Light incident vertically through the second non-patterned area NPA2 may be retroreflected by the second micro prism MP2 positioned in the second patterned area PA2.

The width along the horizontal direction of the patterned areas PA1, PA2 of either the first prism pattern layer 914-1 or the second prism pattern layer 914-2 may be substantially identical or similar to the width along the horizontal direction of the non-patterned areas NPA1, NPA2 of the other prism pattern layers 914-1, 914-2. For example, the width along the horizontal direction of the first patterned area PA1 may be substantially identical or similar to the width along the horizontal direction of the second non-patterned area NPA2. For example, the width along the horizontal direction of the second patterned area PA2 may be substantially identical or similar to the width along the horizontal direction of the first non-patterned area NPA1. Accordingly, in case that the back cover 900 with the first prism pattern layer 914-1 and the second prism pattern layer 914-2 stacked is viewed from above (e.g., in case of being viewed in the vertical direction), the boundary between the first patterned area PA1 and the second patterned area PA2 may be almost invisible.

The first patterned area PA1 may have a smaller width along the horizontal direction compared to the first non-patterned area NPA1. For example, the first patterned area PA1 may have a horizontal width of at least N times the first non-patterned area NPA1, where N may be a value between 0 and 1. The second patterned area PA2 may have a larger width along the horizontal direction compared to the second non-patterned area NPA2. For example, the second patterned area PA2 may have a horizontal width of at least M times the second non-patterned area NPA2, where M may be a value greater than 1.

The number of first micro prisms MP1 disposed in the first patterned area PA1 may be less than the number of second micro prisms MP2 disposed in the second patterned area PA2. The first patterned area PA1 of the first prism pattern layer 914-1 is formed narrower than the second patterned area PA2 of the second prism pattern layer 914-2, and the number of first micro prisms MP1 may be less than the number of second micro prisms MP2.

The second prism pattern layer 914-2 may be disposed above the first prism pattern layer 914-1 along the vertical direction. Since the second prism pattern layer 914-2 is positioned closer to the cover layer 917 compared to the first prism pattern layer 914-1, the second prism pattern layer 914-2 may be more advantageous for retroreflection than the first prism pattern layer 914-1. Accordingly, the horizontal width of the second patterned area PA2 of the second prism pattern layer 914-2, which is positionally advantageous for retroreflection, is larger than the horizontal width of the first patterned area PA1 of the first prism pattern layer 914-1, and overall retroreflection efficiency may be enhanced.

The cover layer 917 may be disposed on the two or more prism pattern layers 914-1, 914-2. For example, the cover layer 917 may be disposed on the second prism pattern layer 914-2 positioned higher among the two or more prism pattern layers 914-1, 914-2. For example, the cover layer 917 may be disposed on the second substrate layer 915-2 bonded to the second prism pattern layer 914-2.

The cover layer 917 is positioned at the outermost side of the back cover 900 and may be exposed to the external environment. The cover layer 917 may be composed of materials having optical transparency. The cover layer 917 may include, e.g., glass, PC, acrylic, PTFE, or ETFE, but the disclosure is not limited thereto. The cover layer 917 may have excellent durability, chemical stability, and optical properties. The cover layer 917 may be bonded to the second substrate layer 915-2 by the third adhesive layer 916. The cover layer 917 may be disposed across at least a portion or all of the patterned areas PA1, PA2 (e.g., including the first patterned area PA1 or the second patterned area PA2) and/or the non-patterned areas NPA1, NPA2 (e.g., including the first non-patterned area NPA1 or the second non-patterned area NPA2), and may be bonded to the second substrate layer 915-2.

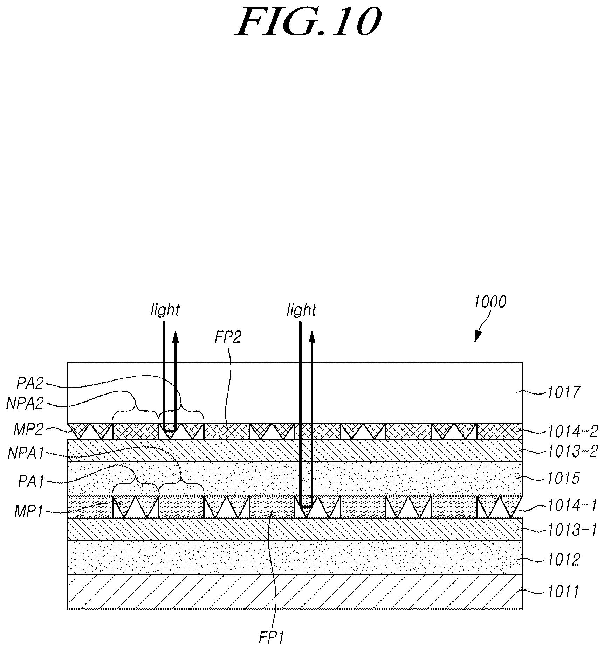

FIG. 10 is a cross-sectional view illustrating a back cover including a multilayer retroreflective structure according to various embodiments of the disclosure.

Referring to FIG. 10, a back cover 1000 may include a multilayer retroreflective structure. The multilayer retroreflective structure may include two or more prism pattern layers 1014-1, 1014-2. The multilayer retroreflective structure may include a shielding print layer 1011, a base layer 1012, the two or more prism pattern layers 1014-1, 1014-2, a substrate layer 1015, and/or a cover layer 1017. According to an embodiment, the back cover 1000 may include a shielding print layer 1011, a base layer 1012, the two or more prism pattern layers 1014-1, 1014-2, a substrate layer 1015, and/or a cover layer 1017. According to an embodiment, at least a portion of the back cover 1000 may be omitted, or new layer components may be further included in the back cover 1000.

The shielding print layer 1011 may be introduced to control the amount and type of light reflected or transmitted by the back cover 1000. According to an embodiment, the shielding print layer 1011 may also block heat and/or ultraviolet rays from the outside. The shielding print layer 1011 may include, e.g., metal materials (e.g., aluminum, silver, copper, chromium, nickel, or alloys thereof), and/or various dyes or pigments, but the disclosure is not limited thereto. The shielding print layer 1011 may also include metal oxides, carbonates, or organic compounds for ultraviolet blocking.

The base layer 1012 may be disposed on the shielding print layer 1011. The base layer 1012 provides a basic structure for the multilayer retroreflective structure and may support other layers. The base layer 1012 may contain, e.g., PET, and the base layer 1012 including PET may also be referred to as a PET layer. According to an embodiment, the base layer 1012 may include PC, PP, PA, PVC, PTFE, ETFE, or PEN, but the disclosure is not limited thereto.

The two or more prism pattern layers 1014-1, 1014-2 may be disposed on the base layer 1012. The two or more prism pattern layers 1014-1, 1014-2 may include a first prism pattern layer 1014-1 and a second prism pattern layer 1014-2. The second prism pattern layer 1014-2 may be disposed relatively above the first prism pattern layer 1014-1. The second prism pattern layer 1014-2 may be disposed above the first prism pattern layer 1014-1 based on the vertical direction. The first prism pattern layer 1014-1 and the second prism pattern layer 1014-2 may be separated from each other along the vertical direction. According to an embodiment, the first prism pattern layer 1014-1 may be referred to as a "lower prism pattern layer," and the second prism pattern layer 1014-2 may be referred to as an "upper prism pattern layer."

The prism pattern layers 1014-1, 1014-2 may include a plurality of micro prisms MP1, MP2 that generate a retroreflective effect. The micro prisms MP1, MP2 may protrude in the rear direction (e.g., the -Z-axis direction of FIG. 2).

The micro prisms MP1, MP2 formed in one prism pattern layer 1014-1, 1014-2 may have substantially the same or similar shapes. For example, first micro prisms MP1 formed in the first prism pattern layer 1014-1 may have substantially the same or similar shapes. For example, second micro prisms MP2 formed in the second prism pattern layer 1014-2 may have substantially the same or similar shapes. According to an embodiment, the first micro prism MP1 may be referred to as a "lower micro prism," and the second micro prism MP2 may be referred to as an "upper micro prism."

The micro prisms MP1, MP2 (e.g., the first micro prism MP1, the second micro prism MP2) formed in different prism pattern layers 1014-1, 1014-2 (e.g., the first prism pattern layer 1014-1, the second prism pattern layer 1014-2) may have different shapes from each other, but the disclosure is not limited thereto. For example, the first micro prism MP1 and the second micro prism MP2 may have different shapes from each other. For example, the first micro prism MP1 and the second micro prism MP2 may have substantially the same or similar shapes.

The first micro prism MP1 may have substantially the same or larger dimension compared to the second micro prism MP2. For example, the first micro prism MP1 may have a greater thickness (or height) in the vertical direction than the second micro prism MP2. As the vertical thickness of the micro prisms MP1, MP2 increases, the optical path in the prism pattern layers 1014-1, 1014-2 may be extended. As the optical path extends, the micro prisms MP1, MP2 may have higher reflection efficiency. Thus, as the first micro prism MP1 has a greater thickness in the vertical direction compared to the second micro prism MP2, the first micro prism MP1 may have greater reflection efficiency. The relatively high reflection efficiency of the first micro prism MP1 may compensate for the optical performance of the first micro prism MP1 that may differ from the second micro prism MP2 due to being positioned farther from the cover layer 1017 compared to the second micro prism MP2, and may make the boundary between the first micro prism MP1 and the second micro prism MP2 invisible.

The first micro prism MP1 may have substantially the same or narrower width in the horizontal direction (e.g., including the X-axis direction or Y-axis direction of FIG. 2) compared to the second micro prism MP2. In an example, the widths of the first micro prism MP1 and the second micro prism MP2 are substantially the same, and the reflection efficiency by the first micro prism MP1 and the second micro prism MP2 may be adjusted through the thickness of the first micro prism MP1 and/or the second micro prism MP2. In an example, by designing the width of the first micro prism MP1 to be narrower compared to the second micro prism MP2, the difference in reflection efficiency with the second micro prism MP2 that occurs as the first micro prism MP1 is positioned farther from the cover layer 1017 may be compensated.

The first micro prism MP1 and the second micro prism MP2 may have substantially the same or similar shapes. By having the first micro prism MP1 and the second micro prism MP2 have substantially the same or similar shapes, the complexity of the manufacturing process may be improved.

The first prism pattern layer 1014-1 may have a greater thickness (or height) in the vertical direction than the second prism pattern layer 1014-2. As the thickness of the first prism pattern layer 1014-1 becomes greater than the thickness of the second prism pattern layer 1014-2, the first micro prism MP1 may be formed with a greater thickness than the second micro prism MP2.

In an example, at least one of the first micro prism MP1 and the second micro prism MP2 may be related to the thickness of the first prism pattern layer 1014-1 and the second prism pattern layer 1014-2. For example, the first micro prism MP1 (or the second micro prism MP2) may have a thickness of a specified ratio (e.g., at least 50%, at least 60%, at least 70%, at least 80%, at least 100%, at least 105%, or 100%) of the first prism pattern layer 1014-1 (or the second prism pattern layer 1014-2). For example, the first micro prism MP1 (or the second micro prism MP2) may have a thickness substantially the same as or smaller than the thickness of the first prism pattern layer 1014-1 (the second prism pattern layer 1014-2).

In an example, the two or more prism pattern layers 1014-1, 1014-2 (e.g., including at least one of the first prism pattern layer 1014-1, the second prism pattern layer 1014-2) may have a specified thickness regardless of the thickness of two or more micro prisms MP1, MP2 (e.g., including at least one of the first micro prism MP1, the second micro prism MP2).

The two or more prism pattern layers 1014-1, 1014-2 may include patterned areas PA1, PA2 and non-patterned areas NPA1, NPA2. The first prism pattern layer 1014-1 may include a first patterned area PA1 and a first non-patterned area NPA1. The second prism pattern layer 1014-2 may include a second patterned area PA2 and a second non-patterned area NPA2.

One or more micro prisms MP1, MP2 (e.g., the first micro prism MP1, the second micro prism MP2) may be formed or disposed in the patterned areas PA1, PA2 (e.g., including the first patterned area PA1, the second patterned area PA2). The first micro prism MP1 may be disposed or formed in the first patterned area PA1 of the first prism pattern layer 1014-1. The second micro prism MP2 may be disposed or formed in the second patterned area PA2 of the second prism pattern layer 1014-2.

The micro prisms MP1, MP2 may not be formed or disposed in the non-patterned areas NPA1, NPA2 (including the first non-patterned area NPA1, the second non-patterned area NPA2). Flat portions FP1, FP2 (e.g., a first flat portion FP1, a second flat portion FP2) may be formed or disposed in the non-patterned areas NPA1, NPA2. The flat portions FP1, FP2 may have a constant thickness along the horizontal direction. The first flat portion FP1 may be disposed or formed in the first non-patterned area NPA1 of the first prism pattern layer 1014-1. The second flat portion FP2 may be disposed or formed in the second non-patterned area NPA2 of the second prism pattern layer 1014-2.

Two or more prism pattern layers 1014-1, 1014-2 (e.g., including the first prism pattern layer 1014-1, the second prism pattern layer 1014-2) may be disposed or formed on one surface of the substrate layer 1015 and the cover layer 1017, respectively. For example, one of the two or more prism pattern layers 1014-1, 1014-2 may be disposed or formed in the rear direction of the substrate layer 1015, and the other may be disposed or formed in the rear direction of the cover layer 1017. In other words, the two or more prism pattern layers 1014-1, 1014-2 may be formed integrally with the substrate layer 1015 and the cover layer 1017, respectively, or formed separately and bonded to the substrate layer 1015 and the cover layer 1017.

The substrate layer 1015 may correspond to the first prism pattern layer 1014-1, and the cover layer 1017 may correspond to the second prism pattern layer 1014-2. The first prism pattern layer 1014-1 may be disposed or formed in the rear direction of the substrate layer 1015. The second prism pattern layer 1014-2 may be disposed or formed in the rear direction of the cover layer 1017. Accordingly, the first prism pattern layer 1014-1 may be disposed on the rear surface of the substrate layer 1015, and the second prism pattern layer 1014-2 may be disposed on the rear surface of the cover layer 1017.

Adhesive layers 1013-1, 1013-2 may be disposed in the front direction of the base layer 1012 and/or the substrate layer 1015. The adhesive layers 1013-1, 1013-2 may include a first adhesive layer 1013-1 disposed in the front direction of the base layer 1012 and a second adhesive layer 1013-2 disposed in the front direction of the substrate layer 1015. Here, the adhesive layers 1013-1, 1013-2 (e.g., including the first adhesive layer 1013-1 and/or the second adhesive layer 1013-2) may include, e.g., OCA. The OCA may include acrylic adhesives and/or silicone adhesives. The adhesive layers 1013-1, 1013-2 may also include UV-curable adhesives, hot-melt adhesives, PSA, epoxy, and/or adhesives.

The first prism pattern layer 1014-1 may be bonded to the base layer 1012 while bonded to the substrate layer 1015. The first prism pattern layer 1014-1 and the base layer 1012 may be bonded to each other by the first adhesive layer 1013-1. The front surface of the first prism pattern layer 1014-1 may directly contact the substrate layer 1015. The rear surface of the first prism pattern layer 1014-2 may be bonded to the base layer 1012 by the first adhesive layer 1013-1.

Across the first patterned area PA1 and the first non-patterned area NPA1, the front surface of the first prism pattern layer 1014-1 may be bonded to the rear surface of the substrate layer 1015. In the first non-patterned area NPA1, the first prism pattern layer 1014-1 may be bonded to the base layer 1012 by the first adhesive layer 1013-1. By surface contact between the first flat portion FP1 and the base layer 1012, the first prism pattern layer 1014-1 and the base layer 1012 may be bonded to each other, and in the bonded state, the first micro prism MP1 may form an air cell with the base layer 1012.

The second prism pattern layer 1014-2 may be bonded to the substrate layer 1015 while bonded to the cover layer 1017. The second prism pattern layer 1014-2 and the substrate layer 1015 may be bonded to each other by the second adhesive layer 1013-2. The front surface of the second prism pattern layer 1014-2 may directly contact the rear surface of the cover layer 1017. The rear surface of the second prism pattern layer 1014-2 may be bonded to the front surface of the substrate layer 1015 by the second adhesive layer 1013-2.

Across the second patterned area PA2 and the second non-patterned area NPA2, the front surface of the second prism pattern layer 1014-2 may be bonded to the rear surface of the cover layer 1017. In the second non-patterned area NPA2, the second prism pattern layer 1014-2 may be bonded to the substrate layer 1015 by the second adhesive layer 1013-2. By surface contact between the second flat portion FP2 and the substrate layer 1015, the second prism pattern layer 1014-2 and the substrate layer 1015 may be bonded to each other, and in the bonded state, the second micro prism MP2 may form an air cell with the substrate layer 1015.

In the non-patterned areas NPA1, NPA2 (e.g., the first non-patterned area NPA1, the second non-patterned area NPA2), the vertical thickness of the flat portions (e.g., including the first flat portion FP1, the second flat portion FP2) may be the maximum vertical thickness of the prism pattern layers 1014-1, 1014-2. For example, the maximum thickness of the first prism pattern layer 1014-1 may be substantially the same as the thickness of the first flat portion FP1. For example, the maximum thickness of the second prism pattern layer 714-2 may be substantially the same as the thickness of the second flat portion FP2.

According to an embodiment, the prism pattern layers 1014-1, 1014-2 may have various thicknesses corresponding to the shape of the micro prisms MP1, MP2 in the patterned areas PA1, PA2 due to the micro prisms MP1, MP2. In the patterned areas PA1, PA2, the vertical thickness of the micro prisms MP1, MP2 may be substantially the same as or smaller than the maximum thickness of the prism pattern layers 1014-1, 1014-2. For example, the maximum thickness of the first prism pattern layer 1014-1 may be substantially the same as or greater than the maximum thickness of the first micro prism MP1. For example, the maximum thickness of the second prism pattern layer 1014-2 may be substantially the same as or greater than the maximum thickness of the second micro prism MP2.

In the first non-patterned area NPA1, the first prism pattern layer 1014-1 is physically bonded to the base layer 1012 through the first adhesive layer 1013-1, and in the first patterned area PA1, the first prism pattern layer 1014-1 may be spaced apart from the first adhesive layer 1013-1 and/or the base layer 1012 in the vertical direction. An air cell may be formed in the spaced space between the first prism pattern layer 1014-1 and the base layer 1012 in the first patterned area PA1. As the air cell is formed, retroreflection may occur in the first patterned area PA1.

In the second non-patterned area NPA2, the second prism pattern layer 1014-2 is physically bonded to the substrate layer 1015 through the second adhesive layer 1013-2, and in the second patterned area PA2, the second prism pattern layer 1014-2 may be spaced apart from the second adhesive layer 1013-2 and/or the substrate layer 1015 in the vertical direction. An air cell may be formed in the spaced space between the second prism pattern layer 1014-2 and the substrate layer 1015 in the second patterned area PA2. As the air cell is formed, retroreflection may occur in the second patterned area PA2.

In the first non-patterned area NPA1, the first prism pattern layer 1014-1 is bonded to the base layer 1012 positioned in the rear direction, and accordingly, in the first non-patterned area NPA1, the first prism pattern layer 1014-1 may not form an air cell. In the second non-patterned area NPA2, the second prism pattern layer 1014-2 is bonded to the substrate layer 1015 positioned in the rear direction, and accordingly, in the second non-patterned area NPA2, the second prism pattern layer 1014-2 may not form an air cell. Retroreflection in the non-patterned areas NPA1, NPA2 (e.g., the first non-patterned area NPA1, the second non-patterned area NPA2) of the first prism pattern layer 1014-1 and/or the second prism pattern layer 1014-2 that do not form air cells may be compensated in the patterned areas PA1, PA2 (e.g., the second patterned area PA2, the first patterned area PA1) of other prism pattern layers 1014-1, 1014-2 designated to overlap that area.

The first patterned area PA1 (or the second patterned area PA2) and the first non-patterned area NPA1 (or the second non-patterned area NPA2) may be alternately positioned along the horizontal direction. As the first patterned area PA1 (or the second patterned area PA2) and the first non-patterned area NPA1 (the second non-patterned area NPA2) are alternately positioned, air cells formed corresponding to the first patterned area PA1 (or the second patterned area PA2) may also be alternately formed along the horizontal direction. The air cells may be positioned between the first non-patterned areas NPA1 (or the second non-patterned areas NPA2).

The patterned areas PA1, PA2 of either the first prism pattern layer 1014-1 or the second prism pattern layer 1014-2 may at least partially overlap the non-patterned areas NPA1, NPA2 of the other prism pattern layers 1014-1, 1014-2. For example, the first patterned area PA1 and the second non-patterned area NPA2 may at least partially overlap along the vertical direction (e.g., the Z-axis direction). Light incident vertically through the second non-patterned area NPA2 may be retroreflected by the first micro prism MP1 positioned in the first patterned area PA1. For example, the second patterned area PA2 and the first non-patterned area NPA1 may at least partially overlap along the vertical direction. Light incident vertically through the second non-patterned area NPA2 may be retroreflected by the second micro prism MP2 positioned in the second patterned area PA2.

The width along the horizontal direction of the patterned areas PA1, PA2 of either the first prism pattern layer 1014-1 or the second prism pattern layer 1014-2 may be substantially identical or similar to the width along the horizontal direction of the non-patterned areas NPA1, NPA2 of the other prism pattern layers 1014-1, 1014-2. For example, the width along the horizontal direction of the first patterned area PA1 may be substantially identical or similar to the width along the horizontal direction of the second non-patterned area NPA2. For example, the width along the horizontal direction of the second patterned area PA2 may be substantially identical or similar to the width along the horizontal direction of the first non-patterned area NPA1. Accordingly, in case that the back cover 1000 with the first prism pattern layer 1014-1 and the second prism pattern layer 1014-2 stacked is viewed from above (e.g., in case of being viewed in the vertical direction), the boundary between the first patterned area PA1 and the second patterned area PA2 may be almost invisible.

The second prism pattern layer 1014-2 may be disposed above the first prism pattern layer 1014-1 along the vertical direction. Since the second prism pattern layer 1014-2 is positioned closer to the cover layer 1017 compared to the first prism pattern layer 1014-1, the second prism pattern layer 1014-2 may be more advantageous for retroreflection than the first prism pattern layer 1014-1. Accordingly, the horizontal width of the second patterned area PA2 of the second prism pattern layer 1014-2, which is positionally advantageous for retroreflection, is larger than the horizontal width of the first patterned area PA1 of the first prism pattern layer 1014-1, and overall retroreflection efficiency may be enhanced.

The cover layer 1017 may be disposed on the two or more prism pattern layers 1014-1, 1014-2. For example, the cover layer 1017 may be disposed on the second prism pattern layer 1014-2 positioned higher among the two or more prism pattern layers 1014-1, 1014-2. For example, the cover layer 1017 may be disposed on the cover layer 1017 bonded to the second prism pattern layer 1014-2.

The cover layer 1017 is positioned at the outermost side of the back cover 1000 and may be exposed to the external environment. The cover layer 1017 may be composed of materials having optical transparency. The cover layer 1017 may include, e.g., glass, PC, acrylic, PTFE, or ETFE, but the disclosure is not limited thereto. The cover layer 1017 may have excellent durability, chemical stability, and optical properties. The cover layer 1017 may be bonded to the substrate layer 1015 by the second adhesive layer 1013-2. The cover layer 1017 may be disposed across at least a portion or all of the patterned areas PA1, PA2 (e.g., including the first patterned area PA1 or the second patterned area PA2) and/or the non-patterned areas NPA1, NPA2 (e.g., including the first non-patterned area NPA1 or the second non-patterned area NPA2), and may be bonded to the substrate layer 1015.

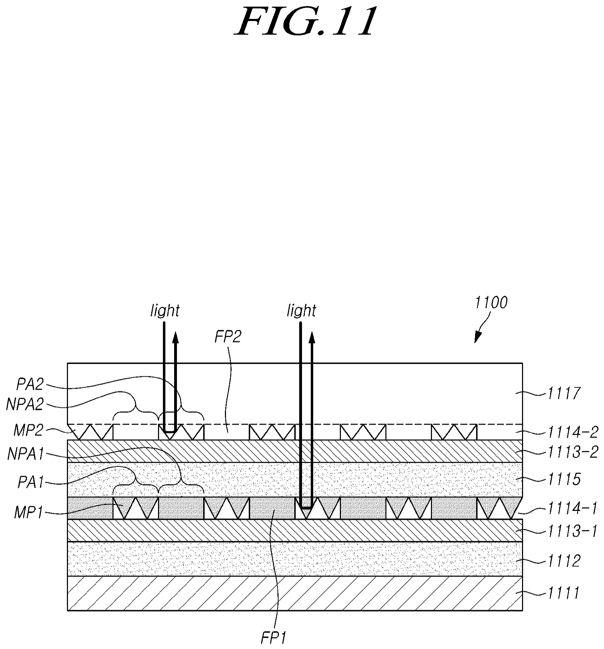

FIG. 11 is a cross-sectional view illustrating a back cover including a multilayer retroreflective structure according to various embodiments of the disclosure.

Referring to FIG. 11, a back cover 1100 may include a multilayer retroreflective structure. The multilayer retroreflective structure may include two or more prism pattern layers 1114-1, 1114-2. The multilayer retroreflective structure may include a shielding print layer 1111, a base layer 1112, the two or more prism pattern layers 1114-1, 1114-2, a substrate layer 1115, and/or a cover layer 1117. According to an embodiment, the back cover 1100 may include a shielding print layer 1111, a base layer 1112, the two or more prism pattern layers 1114-1, 1114-2, a substrate layer 1115, and/or a cover layer 1117. According to an embodiment, at least a portion of the back cover 1100 may be omitted, or new layer components may be further included in the back cover 1100.

The shielding print layer 1111 may be introduced to control the amount and type of light reflected or transmitted by the back cover 1100. The shielding print layer 1111 may also block heat and/or ultraviolet rays from the outside. The shielding print layer 1111 may include, e.g., metal materials (e.g., aluminum, silver, copper, chromium, nickel, or alloys thereof), and/or various dyes or pigments, but the disclosure is not limited thereto. The shielding print layer 1111 may also include metal oxides, carbonates, or organic compounds for ultraviolet blocking.

The base layer 1112 may be disposed on the shielding print layer 1111. The base layer 1112 provides a basic structure for the multilayer retroreflective structure and may support other layers. The base layer 1112 may contain, e.g., PET, and the base layer 1112 including PET may also be referred to as a PET layer. According to an embodiment, the base layer 1112 may include PC, PP, PA, PVC, PTFE, ETFE, or PEN, but the disclosure is not limited thereto.

The two or more prism pattern layers 1114-1, 1114-2 may be disposed on the base layer 1112. The two or more prism pattern layers 1114-1, 1114-2 may include a first prism pattern layer 1114-1 and a second prism pattern layer 1114-2. The second prism pattern layer 1114-2 may be disposed relatively above the first prism pattern layer 1114-1. The second prism pattern layer 1114-2 may be disposed above the first prism pattern layer 1114-1 based on the vertical direction. The first prism pattern layer 1114-1 and the second prism pattern layer 1114-2 may be separated from each other along the vertical direction. According to an embodiment, the first prism pattern layer 1114-1 may be referred to as a "lower prism pattern layer," and the second prism pattern layer 1114-2 may be referred to as an "upper prism pattern layer."

The prism pattern layers 1114-1, 1114-2 may include a plurality of micro prisms MP1, MP2 that generate a retroreflective effect. The micro prisms MP1, MP2 may protrude in the rear direction (e.g., the -Z-axis direction of FIG. 2).

The micro prisms MP1, MP2 formed in one prism pattern layer 1114-1, 1114-2 may have substantially the same or similar shapes. For example, first micro prisms MP1 formed in the first prism pattern layer 1114-1 may have substantially the same or similar shapes. For example, second micro prisms MP2 formed in the second prism pattern layer 1114-2 may have substantially the same or similar shapes. According to an embodiment, the first micro prism MP1 may be referred to as a "lower micro prism," and the second micro prism MP2 may be referred to as an "upper micro prism."

The micro prisms MP1, MP2 (e.g., the first micro prism MP1, the second micro prism MP2) formed in different prism pattern layers 1114-1, 1114-2 (e.g., the first prism pattern layer 1114-1, the second prism pattern layer 1114-2) may have different shapes from each other, but the disclosure is not limited thereto. For example, the first micro prism MP1 and the second micro prism MP2 may have different shapes from each other. For example, the first micro prism MP1 and the second micro prism MP2 may have substantially the same or similar shapes.

The first micro prism MP1 may have substantially the same or larger dimension compared to the second micro prism MP2. For example, the first micro prism MP1 may have a greater thickness (or height) in the vertical direction than the second micro prism MP2. As the vertical thickness of the micro prisms MP1, MP2 increases, the optical path in the prism pattern layers 1114-1, 1114-2 may be extended. As the optical path extends, the micro prisms MP1, MP2 may have higher reflection efficiency. Thus, as the first micro prism MP1 has a greater thickness in the vertical direction compared to the second micro prism MP2, the first micro prism MP1 may have greater reflection efficiency. The relatively high reflection efficiency of the first micro prism MP1 may compensate for the optical performance of the first micro prism MP1 that may differ from the second micro prism MP2 due to being positioned farther from the cover layer 1117 compared to the second micro prism MP2, and may make the boundary between the first micro prism MP1 and the second micro prism MP2 invisible.

The first micro prism MP1 may have substantially the same or narrower width in the horizontal direction (e.g., including the X-axis direction or Y-axis direction of FIG. 2) compared to the second micro prism MP2. In an example, the widths of the first micro prism MP1 and the second micro prism MP2 are substantially the same, and the reflection efficiency by the first micro prism MP1 and the second micro prism MP2 may be adjusted through the thickness of the first micro prism MP1 and/or the second micro prism MP2. In an example, by designing the width of the first micro prism MP1 to be narrower compared to the second micro prism MP2, the difference in reflection efficiency with the second micro prism MP2 that occurs as the first micro prism MP1 is positioned farther from the cover layer 1117 may be compensated.

The first micro prism MP1 and the second micro prism MP2 may have substantially the same or similar shapes. By having the first micro prism MP1 and the second micro prism MP2 have substantially the same or similar shapes, the complexity of the manufacturing process may be enhanced.

The first prism pattern layer 1114-1 may have a greater thickness (or height) in the vertical direction than the second prism pattern layer 1114-2. As the thickness of the first prism pattern layer 1114-1 becomes greater than the thickness of the second prism pattern layer 1114-2, the first micro prism MP1 may be formed with a greater thickness than the second micro prism MP2.

In an example, at least one of the first micro prism MP1 and the second micro prism MP2 may be related to the thickness of the first prism pattern layer 1114-1 and the second prism pattern layer 1114-2. For example, the first micro prism MP1 (or the second micro prism MP2) may have a thickness of a specified ratio (e.g., at least 50%, at least 60%, at least 70%, at least 80%, at least 100%, at least 105%, or 100%) of the first prism pattern layer 1114-1 (or the second prism pattern layer 1114-2). For example, the first micro prism MP1 (or the second micro prism MP2) may have a thickness substantially the same as or smaller than the thickness of the first prism pattern layer 1114-1 (the second prism pattern layer 1114-2).

In an example, the two or more prism pattern layers 1114-1, 1114-2 (e.g., including at least one of the first prism pattern layer 1114-1, the second prism pattern layer 1114-2) may have a specified thickness regardless of the thickness of two or more micro prisms MP1, MP2 (e.g., including at least one of the first micro prism MP1, the second micro prism MP2).

The two or more prism pattern layers 1114-1, 1114-2 may include patterned areas PA1, PA2 and non-patterned areas NPA1, NPA2. The first prism pattern layer 1114-1 may include a first patterned area PA1 and a first non-patterned area NPA1. The second prism pattern layer 1114-2 may include a second patterned area PA2 and a second non-patterned area NPA2.

One or more micro prisms MP1, MP2 (e.g., the first micro prism MP1, the second micro prism MP2) may be formed or disposed in the patterned areas PA1, PA2 (e.g., including the first patterned area PA1, the second patterned area PA2). The first micro prism MP1 may be disposed or formed in the first patterned area PA1 of the first prism pattern layer 1114-1. The second micro prism MP2 may be disposed or formed in the second patterned area PA2 of the second prism pattern layer 1114-2.

The micro prisms MP1, MP2 may not be formed or disposed in the non-patterned areas NPA1, NPA2 (including the first non-patterned area NPA1, the second non-patterned area NPA2). Flat portions FP1, FP2 (e.g., a first flat portion FP1, a second flat portion FP2) may be formed or disposed in the non-patterned areas NPA1, NPA2. The flat portions FP1, FP2 may have a constant thickness along the horizontal direction. The first flat portion FP1 may be disposed or formed in the first non-patterned area NPA1 of the first prism pattern layer 1114-1. The second flat portion FP2 may be disposed or formed in the second non-patterned area NPA2 of the second prism pattern layer 1114-2.

One of the two or more prism pattern layers 1114-1, 1114-2 (e.g., including the first prism pattern layer 1114-1, the second prism pattern layer 1114-2) may be disposed on the substrate layer 1115, and the other may be formed integrally with the cover layer 1117. For example, the substrate layer 1115 may correspond to the first prism pattern layer 1114-1, and the cover layer 1117 may correspond to the second prism pattern layer 1114-2. The first prism pattern layer 1114-1 may be disposed or formed in the rear direction of the substrate layer 1115. The second prism pattern layer 1114-2 may be formed integrally with the cover layer 1117 in the rear direction of the cover layer 1117. Accordingly, the first prism pattern layer 1114-1 may be disposed on the rear surface of the substrate layer 1115, and the second prism pattern layer 1114-2 may be formed on the rear surface of the cover layer 1117. The second prism pattern layer 1114-2 may be formed by processing the cover layer 1117. The second prism pattern layer 1114-2 may be composed of substantially the same material as the cover layer 1117. The cover layer 1117 and the second prism pattern layer 1114-2 may include processable glass or polymer materials, but the disclosure is not limited thereto.

Adhesive layers 1113-1, 1113-2 may be disposed in the front direction of the base layer 1112 and/or the substrate layer 1115. The adhesive layers 1113-1, 1113-2 may include a first adhesive layer 1113-1 disposed in the front direction of the base layer 1112 and a second adhesive layer 1113-2 disposed in the front direction of the substrate layer 1115. Here, the adhesive layers 1113-1, 1113-2 (e.g., the first adhesive layer 1113-1 and/or the second adhesive layer 1113-2) may include, e.g., OCA. The OCA may include acrylic adhesives and/or silicone adhesives. The adhesive layers 1113-1, 1113-2 may also include UV-curable adhesives, hot-melt adhesives, PSA, and/or epoxy adhesives.

The first prism pattern layer 1114-1 may be bonded to the base layer 1112 while bonded to the substrate layer 1115. The first prism pattern layer 1114-1 and the base layer 1112 may be bonded to each other by the first adhesive layer 1113-1. The front surface of the first prism pattern layer 1114-1 may directly contact the rear surface of the substrate layer 1115. The rear surface of the first prism pattern layer 1114-2 may be bonded to the front surface of the base layer 1112 by the first adhesive layer 1113-1.

Across the first patterned area PA1 and the first non-patterned area NPA1, the front surface of the first prism pattern layer 1114-1 may be bonded to the rear surface of the substrate layer 1115. In the first non-patterned area NPA1, the first prism pattern layer 1114-1 may be bonded to the base layer 1112 by the first adhesive layer 1113-1. By surface contact between the first flat portion FP1 and the base layer 1112, the first prism pattern layer 1114-1 and the base layer 1112 may be bonded to each other, and in the bonded state, the first micro prism MP1 may form an air cell with the base layer 1112.

The cover layer 1117 may be bonded to the substrate layer 1115. The cover layer 1117 and the substrate layer 1115 may be bonded to each other by the second adhesive layer 1113-2. A second prism pattern layer 1114-2 may be provided on the rear surface of the cover layer 1117. For example, the second prism pattern layer 1114-2 may be formed integrally on the rear surface of the cover layer 1117. In other words, the cover layer 1117 includes at least a portion of the second prism pattern layer 1114-2, and the second prism pattern layer 1114-2 may be positioned on the rear surface of the cover layer 1117.

As a result, the second prism pattern layer 1114-2, as at least a portion of the cover layer 1117, may be bonded to the substrate layer 1115. The second prism pattern layer 1114-2 and the substrate layer 1115 may be bonded to each other by the second adhesive layer 1113-2. The rear surface of the second prism pattern layer 1114-2 may be bonded to the front surface of the substrate layer 1115 by the second adhesive layer 1113-2.

In the second non-patterned area NPA2, the cover layer 1117 may be bonded to the substrate layer 1115 by the second adhesive layer 1113-2. By surface contact between the second flat portion FP2 of the cover layer 1117 and the substrate layer 1115, the cover layer 1117 and the substrate layer 1115 may be bonded to each other, and in the bonded state, the second micro prism MP2 may form an air cell with the substrate layer 1115. Since the cover layer 1117 may be bonded to the substrate layer 1115 through the second prism pattern layer 1114-2 composed of at least a portion of the cover layer 1117, the connection relationship between the cover layer 1117 and the substrate layer 1115 may be understood to be substantially the same as the connection relationship between the second prism pattern layer 1114-2 and the substrate layer 1115.

In the non-patterned areas NPA1, NPA2 (e.g., the first non-patterned area NPA1, the second non-patterned area NPA2), the vertical thickness of the flat portions (e.g., including the first flat portion FP1, the second flat portion FP2) may be the maximum vertical thickness of the prism pattern layers 1114-1, 1114-2. For example, the maximum thickness of the first prism pattern layer 1114-1 may be substantially the same as the thickness of the first flat portion FP1. For example, the maximum thickness of the second prism pattern layer 1114-2 may be substantially the same as the thickness of the second flat portion FP2.

According to an embodiment, the prism pattern layers 1114-1, 1114-2 may have various thicknesses corresponding to the shape of the micro prisms MP1, MP2 in the patterned areas PA1, PA2 due to the micro prisms MP1, MP2. In the patterned areas PA1, PA2, the vertical thickness of the micro prisms MP1, MP2 may be substantially the same as or smaller than the maximum thickness of the prism pattern layers 1114-1, 1114-2. For example, the maximum thickness of the first prism pattern layer 1114-1 may be substantially the same as or greater than the maximum thickness of the first micro prism MP1. For example, the maximum thickness of the second prism pattern layer 1114-2 may be substantially the same as or greater than the maximum thickness of the second micro prism MP2.

In the first non-patterned area NPA1, the first prism pattern layer 1114-1 is physically bonded to the base layer 1112 through the first adhesive layer 1113-1, and in the first patterned area PA1, the first prism pattern layer 1114-1 may be spaced apart from the first adhesive layer 1113-1 and/or the base layer 1112 in the vertical direction. An air cell may be formed in the spaced space between the first prism pattern layer 1114-1 and the base layer 1112 in the first patterned area PA1. As the air cell is formed, retroreflection may occur in the first patterned area PA1.

In the second non-patterned area NPA2, the second prism pattern layer 1114-2 is physically bonded to the substrate layer 1115 through the second adhesive layer 1113-2, and in the second patterned area PA2, the second prism pattern layer 1114-2 may be spaced apart from the second adhesive layer 1113-2 and/or the substrate layer 1115 in the vertical direction. An air cell may be formed in the spaced space between the second prism pattern layer 1114-2 and the substrate layer 1115 in the second patterned area PA2. As the air cell is formed, retroreflection may occur in the second patterned area PA2.

In the first non-patterned area NPA1, the first prism pattern layer 1114-1 is bonded to the base layer 1112 positioned in the rear direction, and accordingly, in the first non-patterned area NPA1, the first prism pattern layer 1114-1 may not form an air cell. In the second non-patterned area NPA2, the second prism pattern layer 1114-2 is bonded to the substrate layer 1115 positioned in the rear direction, and accordingly, in the second non-patterned area NPA2, the second prism pattern layer 1114-2 may not form an air cell. Retroreflection in the non-patterned areas NPA1, NPA2 (e.g., the first non-patterned area NPA1, the second non-patterned area NPA2) of the first prism pattern layer 1114-1 and/or the second prism pattern layer 1114-2 that do not form air cells may be compensated in the patterned areas PA1, PA2 (e.g., the second patterned area PA2, the first patterned area PA1) of other prism pattern layers 1114-1, 1114-2 designated to overlap that area.

The first patterned area PA1 (or the second patterned area PA2) and the first non-patterned area NPA1 (or the second non-patterned area NPA2) may be alternately positioned along the horizontal direction. As the first patterned area PA1 (or the second patterned area PA2) and the first non-patterned area NPA1 (the second non-patterned area NPA2) are alternately positioned, air cells formed corresponding to the first patterned area PA1 (or the second patterned area PA2) may also be alternately formed along the horizontal direction. The air cells may be positioned between the first non-patterned areas NPA1 (or the second non-patterned areas NPA2).

The patterned areas PA1, PA2 of either the first prism pattern layer 1114-1 or the second prism pattern layer 1114-2 may at least partially overlap the non-patterned areas NPA1, NPA2 of the other prism pattern layers 1114-1, 1114-2. For example, the first patterned area PA1 and the second non-patterned area NPA2 may at least partially overlap along the vertical direction (e.g., the Z-axis direction). Light incident vertically through the second non-patterned area NPA2 may be retroreflected by the first micro prism MP1 positioned in the first patterned area PA1. For example, the second patterned area PA2 and the first non-patterned area NPA1 may at least partially overlap along the vertical direction. Light incident vertically through the second non-patterned area NPA2 may be retroreflected by the second micro prism MP2 positioned in the second patterned area PA2.

The width along the horizontal direction of the patterned areas PA1, PA2 of either the first prism pattern layer 1114-1 or the second prism pattern layer 1114-2 may be substantially identical or similar to the width along the horizontal direction of the non-patterned areas NPA1, NPA2 of the other prism pattern layers 1114-1, 1114-2. For example, the width along the horizontal direction of the first patterned area PA1 may be substantially identical or similar to the width along the horizontal direction of the second non-patterned area NPA2. For example, the width along the horizontal direction of the second patterned area PA2 may be substantially identical or similar to the width along the horizontal direction of the first non-patterned area NPA1. Accordingly, in case that the back cover 1100 with the first prism pattern layer 1114-1 and the second prism pattern layer 1114-2 stacked is viewed from above (e.g., in case of being viewed in the vertical direction), the boundary between the first patterned area PA1 and the second patterned area PA2 may be almost invisible.

The second prism pattern layer 1114-2 may be disposed above the first prism pattern layer 1114-1 along the vertical direction. Since the second prism pattern layer 1114-2 is positioned closer to the cover layer 1117 compared to the first prism pattern layer 1114-1, the second prism pattern layer 1114-2 may be more advantageous for retroreflection than the first prism pattern layer 1114-1. Accordingly, the horizontal width of the second patterned area PA2 of the second prism pattern layer 1114-2, which is positionally advantageous for retroreflection, is larger than the horizontal width of the first patterned area PA1 of the first prism pattern layer 1114-1, and overall retroreflection efficiency may be enhanced.

The cover layer 1117 may be disposed on the two or more prism pattern layers 1114-1, 1114-2. For example, the cover layer 1117 may be disposed on the second prism pattern layer 1114-2 positioned higher among the two or more prism pattern layers 1114-1, 1114-2. For example, the cover layer 1117 may be disposed on the cover layer 1117 bonded to the second prism pattern layer 1114-2.

The cover layer 1117 is positioned at the outermost side of the back cover 1100 and may be exposed to the external environment. The cover layer 1117 may be composed of materials having optical transparency. The cover layer 1117 may include, e.g., glass, PC, acrylic, PTFE, or ETFE, but the disclosure is not limited thereto. The cover layer 1117 may have excellent durability, chemical stability, and optical properties. The cover layer 1117 may be bonded to the substrate layer 1115 by the second adhesive layer 1013-2. The cover layer 1117 may be disposed across at least a portion or all of the patterned areas PA1, PA2 (e.g., including the first patterned area PA1 or the second patterned area PA2) and/or the non-patterned areas NPA1, NPA2 (e.g., including the first non-patterned area NPA1 or the second non-patterned area NPA2), and may be bonded to the substrate layer 1115.

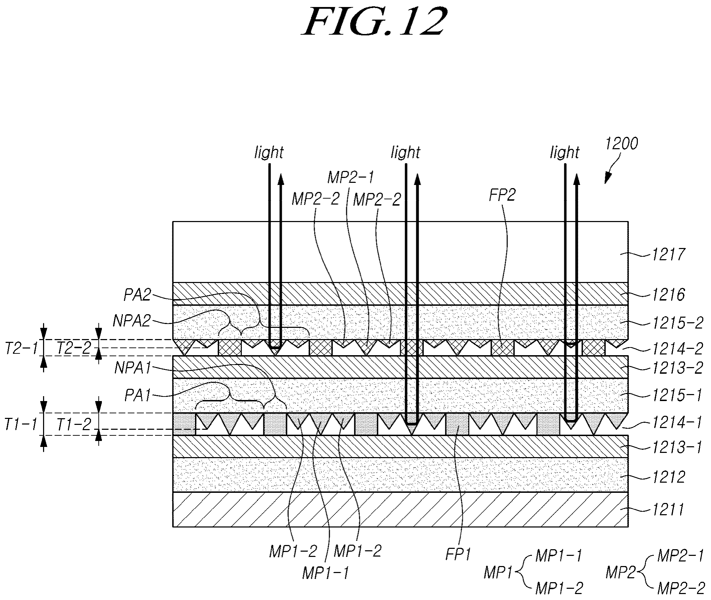

FIG. 12 is a cross-sectional view illustrating a back cover including a multilayer retroreflective structure according to various embodiments of the disclosure.

Referring to FIG. 12, a back cover 1200 may include a multilayer retroreflective structure. The multilayer retroreflective structure may include two or more prism pattern layers 1214-1, 1214-2. The multilayer retroreflective structure may include a shielding print layer 1211, a base layer 1212, two or more prism pattern layers 1214-1, 1214-2, two or more substrate layers 1215-1, 1215-2, and/or a cover layer 1217. According to an embodiment, the back cover 1200 may include a shielding print layer 1211, a base layer 1212, the two or more prism pattern layers 1214-1, 1214-2, two or more substrate layers 1215-1, 1215-2, and/or a cover layer 1217. According to an embodiment, at least a portion of the back cover 1200 may be omitted, or new layer components may be further included in the back cover 1200.

The shielding print layer 1211 may be introduced to control the amount and type of light reflected or transmitted by the back cover 1200. The shielding print layer 1211 may also block heat and/or ultraviolet rays from the outside. The shielding print layer 1211 may include, e.g., metal materials (e.g., aluminum, silver, copper, chromium, nickel, or alloys thereof), and/or various dyes or pigments, but the disclosure is not limited thereto. The shielding print layer 1211 may also include metal oxides, carbonates, or organic compounds for ultraviolet blocking.

The base layer 1212 may be disposed on the shielding print layer 1211. The base layer 1212 provides a basic structure for the multilayer retroreflective structure and may support other layers. The base layer 1212 may contain, e.g., PET, and the base layer 1212 including PET may also be referred to as a PET layer. According to an embodiment, the base layer 1212 may include PC, PP, PA, PVC, PTFE, ETFE, or PEN, but the disclosure is not limited thereto.

The two or more prism pattern layers 1214-1, 1214-2 may be disposed on the base layer 1212. The two or more prism pattern layers 1214-1, 1214-2 may include a first prism pattern layer 1214-1 and a second prism pattern layer 1214-2. The second prism pattern layer 1214-2 may be disposed relatively above the first prism pattern layer 1214-1. The second prism pattern layer 1214-2 may be disposed above the first prism pattern layer 1214-1 based on the vertical direction. The first prism pattern layer 1214-1 and the second prism pattern layer 1214-2 may be separated from each other along the vertical direction. According to an embodiment, the first prism pattern layer 1214-1 may be referred to as a "lower prism pattern layer," and the second prism pattern layer 1214-2 may be referred to as an "upper prism pattern layer."

The prism pattern layers 1214-1, 1214-2 may include a plurality of micro prisms MP1, MP2 that generate a retroreflective effect. The micro prisms MP1, MP2 may protrude in the rear direction (e.g., the -Z-axis direction of FIG. 2).

The micro prisms MP1, MP2 formed in one prism pattern layer 1214-1, 1214-2 may have substantially the same or similar shapes. For example, first micro prisms MP1 formed in the first prism pattern layer 1214-1 may have substantially the same or similar shapes. For example, second micro prisms MP2 formed in the second prism pattern layer 1214-2 may have substantially the same or similar shapes. According to an embodiment, the first micro prism MP1 may be referred to as a "lower micro prism," and the second micro prism MP2 may be referred to as an "upper micro prism."

The micro prisms MP1, MP2 (e.g., the first micro prism MP1, the second micro prism MP2) formed in different prism pattern layers 1214-1, 1214-2 (e.g., the first prism pattern layer 1214-1, the second prism pattern layer 1214-2) may have different shapes from each other, but the disclosure is not limited thereto. For example, the first micro prism MP1 and the second micro prism MP2 may have different shapes from each other. For example, the first micro prism MP1 and the second micro prism MP2 may have substantially the same or similar shapes.

The first micro prism MP1 may have substantially the same or larger average dimension compared to the second micro prism MP2. For example, the first micro prism MP1 may have a greater average thickness (or average height) in the vertical direction than the second micro prism MP2. As the average vertical thickness of the micro prisms MP1, MP2 increases, the optical path in the prism pattern layers 1214-1, 1214-2 may be extended. As the optical path extends, the micro prisms MP1, MP2 may have higher reflection efficiency. Thus, as the first micro prism MP1 has a greater average thickness in the vertical direction compared to the second micro prism MP2, the first micro prism MP1 may have greater reflection efficiency. The relatively high reflection efficiency of the first micro prism MP1 may compensate for the optical performance of the first micro prism MP1 that may differ from the second micro prism MP2 due to being positioned farther from the cover layer 1217 compared to the second micro prism MP2, and may make the boundary between the first micro prism MP1 and the second micro prism MP2 invisible.

The micro prisms (e.g., the first micro prism MP1, the second micro prism MP2) may include one or more central micro prisms (e.g., a first central micro prism MP1-1, a second central micro prism MP2-1) and one or more peripheral micro prisms (e.g., a first peripheral micro prism MP1-2, a second peripheral micro prism MP2-2). A central micro prism provided in a specific prism pattern layer (e.g., either the first prism pattern layer 1214-1 or the second prism pattern layer 1214-2) may be positioned between peripheral micro prisms provided in the specific prism pattern layer. The central micro prism provided in the specific prism pattern layer may have different dimensions (e.g., vertical thickness, horizontal thickness, and/or volume) from the peripheral micro prisms provided in the specific prism pattern layer. The central micro prism provided in the specific prism pattern layer may have the same or different number as the peripheral micro prisms provided in the specific prism pattern layer.

The first micro prism MP1 may include a first central micro prism MP1-1 and one or more first peripheral micro prisms MP1-2. The first central micro prism MP1-1 may be disposed between the first peripheral micro prisms MP1-2. The thickness T1-1 of the first central micro prism MP1-1 may be greater than the thickness T1-2 of the first peripheral micro prism MP1-2. Accordingly, the volume of air cells formed by the first prism pattern layer 1214-1 may increase.

The second micro prism MP2 may include a second central micro prism MP2-1 and one or more second peripheral micro prisms MP2-2. The second central micro prism MP2-1 may be disposed between the second peripheral micro prisms MP2-2. The thickness T2-1 of the second central micro prism MP2-1 may be greater than the thickness T2-2 of the second peripheral micro prism MP2-2. Accordingly, the volume of air cells formed by the second prism pattern layer 1214-2 may increase.

The thickness of the second central micro prism MP2-1 may be substantially the same as or greater than the thickness of the first central micro prism MP1-1. The thickness of the second peripheral micro prism MP2-2 may be substantially the same as or greater than the thickness of the first peripheral micro prism MP1-2.

The first micro prism MP1 may have substantially the same or narrower width in the horizontal direction (e.g., including the X-axis direction or Y-axis direction of FIG. 2) compared to the second micro prism MP2. In an example, the widths of the first micro prism MP1 and the second micro prism MP2 are substantially the same, and the reflection efficiency by the first micro prism MP1 and the second micro prism MP2 may be adjusted through the thickness of the first micro prism MP1 and/or the second micro prism MP2. In an example, by designing the width of the first micro prism MP1 to be narrower compared to the second micro prism MP2, the difference in reflection efficiency with the second micro prism MP2 that occurs as the first micro prism MP1 is positioned farther from the cover layer 1217 may be compensated.

The first micro prism MP1 and the second micro prism MP2 may have substantially the same or similar shapes. By having the first micro prism MP1 and the second micro prism MP2 have substantially the same or similar shapes, the complexity of the manufacturing process may be enhanced.

The first prism pattern layer 1214-1 may have a greater thickness (or height) in the vertical direction than the second prism pattern layer 1214-2. As the thickness of the first prism pattern layer 1214-1 becomes greater than the thickness of the second prism pattern layer 1214-2, the first central micro prism MP1-1 may be formed with a greater thickness than the second central micro prism MP2-1.

In an example, at least one of the first central micro prism MP1-1 and the second central micro prism MP2-1 may be related to the thickness of the first prism pattern layer 1214-1 and the second prism pattern layer 1214-2. For example, the first central micro prism MP1-1 (or the second central micro prism MP2-1) may have a thickness of a specified ratio (e.g., at least 50%, at least 60%, at least 70%, at least 80%, at least 100%, at least 105%, or 100%) of the first prism pattern layer 1214-1 (or the second prism pattern layer 1214-2). For example, the first central micro prism MP1-1 (or the second central micro prism MP2-1) may have a thickness substantially the same as or smaller than the thickness of the first prism pattern layer 1214-1 (the second prism pattern layer 1214-2).

In an example, the two or more prism pattern layers 1214-1, 1214-2 (e.g., including at least one of the first prism pattern layer 1214-1, the second prism pattern layer 1214-2) may have a specified thickness regardless of the thickness of two or more micro prisms MP1, MP2 (e.g., including at least one of the first central micro prism MP1-1, the second central micro prism MP2-1).

The two or more prism pattern layers 1214-1, 1214-2 may include patterned areas PA1, PA2 and non-patterned areas NPA1, NPA2. The first prism pattern layer 1214-1 may include a first patterned area PA1 and a first non-patterned area NPA1. The second prism pattern layer 1214-2 may include a second patterned area PA2 and a second non-patterned area NPA2.

One or more micro prisms MP1, MP2 (e.g., the first micro prism MP1, the second micro prism MP2) may be formed or disposed in the patterned areas PA1, PA2 (e.g., including the first patterned area PA1, the second patterned area PA2). The first micro prism MP1 may be disposed or formed in the first patterned area PA1 of the first prism pattern layer 1214-1. The second micro prism MP2 may be disposed or formed in the second patterned area PA2 of the second prism pattern layer 1214-2.

The micro prisms MP1, MP2 may not be formed or disposed in the non-patterned areas NPA1, NPA2 (including the first non-patterned area NPA1, the second non-patterned area NPA2). Flat portions FP1, FP2 (e.g., a first flat portion FP1, a second flat portion FP2) may be formed or disposed in the non-patterned areas NPA1, NPA2. The flat portions FP1, FP2 may have a constant thickness along the horizontal direction. The first flat portion FP1 may be disposed or formed in the first non-patterned area NPA1 of the first prism pattern layer 1214-1. The second flat portion FP2 may be disposed or formed in the second non-patterned area NPA2 of the second prism pattern layer 1214-2.

The two or more prism pattern layers 1214-1, 1214-2 (e.g., including the first prism pattern layer 1214-1, the second prism pattern layer 1214-2) may be disposed or formed on one surface of corresponding substrate layers 1215-1, 1215-2 (e.g., including the first substrate layer 1215-1 and the first substrate layer 1215-1). For example, the two or more prism pattern layers 1214-1, 1214-2 may be disposed or formed in the rear direction of the corresponding substrate layers 1215-1, 1215-2. In other words, the two or more prism pattern layers 1214-1, 1214-2 may be formed integrally with the corresponding substrate layers 1215-1, 1215-2, or formed separately and bonded to the substrate layers 1215-1, 1215-2.

The substrate layers 1215-1, 1215-2 may include a first substrate layer 1215-1 and/or a second substrate layer 1215-2. The first substrate layer 1215-1 may correspond to the first prism pattern layer 1214-1, and the second substrate layer 1215-2 may correspond to the second prism pattern layer 1214-2. The first prism pattern layer 1214-1 may be disposed or formed in the rear direction of the first substrate layer 1215-1. The second prism pattern layer 1214-2 may be disposed or formed in the rear direction of the second substrate layer 1215-2. Accordingly, the first prism pattern layer 1214-1 may be disposed on the rear surface of the first substrate layer 1215-1, and the second prism pattern layer 1214-2 may be disposed on the rear surface of the second substrate layer 1215-2.

The adhesive layers 1213-1, 1213-2, 1216 may be disposed in the front direction of the base layer 1212, the first substrate layer 1215-1, and/or the second substrate layer 1215-2. The adhesive layers 1213-1, 1213-2, 1216 may include a first adhesive layer 1213-1 disposed in the front direction of the base layer 1212, a second adhesive layer 1213-2 disposed in the front direction of the first substrate layer 1215-1, and a third adhesive layer 1216 disposed in the front direction of the second substrate layer 1215-2. Here, the adhesive layers 1213-1, 1213-2, 1216 (e.g., including the first adhesive layer 1213-1, the second adhesive layer 1213-2, and/or the third adhesive layer 1216) may include, e.g., OCA. The OCA may include acrylic adhesives and/or silicone adhesives. The adhesive layers 1213-1, 1213-2, 1216 may also include UV-curable adhesives, hot-melt adhesives, PSA, and/or epoxy adhesives.

The first prism pattern layer 1214-1 may be bonded to the base layer 1212 while bonded to the first substrate layer 1215-1. The first prism pattern layer 1214-1 and the base layer 1212 may be bonded to each other by the first adhesive layer 1213-1. The front surface of the first prism pattern layer 1214-1 may directly contact the rear surface of the first substrate layer 1215-1. The rear surface of the first prism pattern layer 1214-2 may be bonded to the front surface of the base layer 1212 by the first adhesive layer 1213-1.

Across the first patterned area PA1 and the first non-patterned area NPA1, the front surface of the first prism pattern layer 1214-1 may be bonded to the rear surface of the first substrate layer 1215-1. In the first non-patterned area NPA1, the first prism pattern layer 1214-1 may be bonded to the base layer 1212 by the first adhesive layer 1213-1. By surface contact between the first flat portion FP1 and the base layer 1212, the first prism pattern layer 1214-1 and the base layer 1212 may be bonded to each other, and in the bonded state, the first micro prism MP1 may form an air cell with the base layer 1212.

The second prism pattern layer 1214-2 may be bonded to the first substrate layer 1215-1 while bonded to the second substrate layer 1215-2. The second prism pattern layer 1214-2 and the first substrate layer 1215-1 may be bonded to each other by the second adhesive layer 1213-2. The front surface of the second prism pattern layer 1214-2 may directly contact the rear surface of the second substrate layer 1215-2. The rear surface of the second prism pattern layer 1214-2 may be bonded to the front surface of the first substrate layer 1215-1 by the second adhesive layer 1213-2.

Across the second patterned area PA2 and the second non-patterned area NPA2, the front surface of the second prism pattern layer 1214-2 may be bonded to the rear surface of the second substrate layer 1215-2. In the second non-patterned area NPA2, the second prism pattern layer 1214-2 may be bonded to the first substrate layer 1215-1 by the second adhesive layer 1213-2. By surface contact between the second flat portion FP2 and the first substrate layer 1215-1, the second prism pattern layer 1214-2 and the first substrate layer 1215-1 may be bonded to each other, and in the bonded state, the second micro prism MP2 may form an air cell with the first substrate layer 1215-1.

In the non-patterned areas NPA1, NPA2 (e.g., the first non-patterned area NPA1, the second non-patterned area NPA2), the vertical thickness of the flat portions (e.g., including the first flat portion FP1, the second flat portion FP2) may be the maximum vertical thickness of the prism pattern layers 1214-1, 1214-2. For example, the maximum thickness of the first prism pattern layer 1214-1 may be substantially the same as the thickness of the first flat portion FP1. For example, the maximum thickness of the second prism pattern layer 1214-2 may be substantially the same as the thickness of the second flat portion FP2.

According to an embodiment, the prism pattern layers 1214-1, 1214-2 may have various thicknesses corresponding to the shape of the micro prisms MP1, MP2 in the patterned areas PA1, PA2 due to the micro prisms MP1, MP2. In the patterned areas PA1, PA2, the vertical thickness of the micro prisms MP1, MP2 may be substantially the same as or smaller than the maximum thickness of the prism pattern layers 1214-1, 1214-2. For example, the maximum thickness of the first prism pattern layer 1214-1 may be substantially the same as or greater than the maximum thickness of the first micro prism MP1. For example, the maximum thickness of the second prism pattern layer 1214-2 may be substantially the same as or greater than the maximum thickness of the second micro prism MP2.

In the first non-patterned area NPA1, the first prism pattern layer 1214-1 is physically bonded to the base layer 1212 through the first adhesive layer 1213-1, and in the first patterned area PA1, the first prism pattern layer 1214-1 may be spaced apart from the first adhesive layer 1213-1 and/or the base layer 1212 in the vertical direction. An air cell may be formed in the spaced space between the first prism pattern layer 1214-1 and the base layer 1212 in the first patterned area PA1. As the air cell is formed, retroreflection may occur in the first patterned area PA1.

In the second non-patterned area NPA2, the second prism pattern layer 1214-2 is physically bonded to the first substrate layer 1215-1 through the second adhesive layer 1213-2, and in the second patterned area PA2, the second prism pattern layer 1214-2 may be spaced apart from the second adhesive layer 1213-2 and/or the first substrate layer 1215-1 in the vertical direction. An air cell may be formed in the spaced space between the second prism pattern layer 1214-2 and the first substrate layer 1215-1 in the second patterned area PA2. As the air cell is formed, retroreflection may occur in the second patterned area PA2.

In the first non-patterned area NPA1, the first prism pattern layer 1214-1 is bonded to the base layer 1212 positioned in the rear direction, and accordingly, in the first non-patterned area NPA1, the first prism pattern layer 1214-1 may not form an air cell. In the second non-patterned area NPA2, the second prism pattern layer 1214-2 is bonded to the first substrate layer 1215-1 positioned in the rear direction, and accordingly, in the second non-patterned area NPA2, the second prism pattern layer 1214-2 may not form an air cell. Retroreflection in the non-patterned areas NPA1, NPA2 (e.g., the first non-patterned area NPA1, the second non-patterned area NPA2) of the first prism pattern layer 1214-1 and/or the second prism pattern layer 1214-2 that do not form air cells may be compensated in the patterned areas PA1, PA2 (e.g., the second patterned area PA2, the first patterned area PA1) of other prism pattern layers 1214-1, 1214-2 designated to overlap that area.

The first patterned area PA1 (or the second patterned area PA2) and the first non-patterned area NPA1 (or the second non-patterned area NPA2) may be alternately positioned along the horizontal direction. As the first patterned area PA1 (or the second patterned area PA2) and the first non-patterned area NPA1 (the second non-patterned area NPA2) are alternately positioned, air cells formed corresponding to the first patterned area PA1 (or the second patterned area PA2) may also be alternately formed along the horizontal direction. The air cells may be positioned between the first non-patterned areas NPA1 (or the second non-patterned areas NPA2).

The patterned areas PA1, PA2 of either the first prism pattern layer 1214-1 or the second prism pattern layer 1214-2 may at least partially overlap the non-patterned areas NPA1, NPA2 of the other prism pattern layers 1214-1, 1214-2. For example, the first patterned area PA1 and the second non-patterned area NPA2 may at least partially overlap along the vertical direction. Light incident vertically through the second non-patterned area NPA2 may be retroreflected by the first micro prism MP1 positioned in the first patterned area PA1. For example, the second patterned area PA2 and the first non-patterned area NPA1 may at least partially overlap along the vertical direction. Light incident vertically through the second non-patterned area NPA2 may be retroreflected by the second micro prism MP2 positioned in the second patterned area PA2.

The first peripheral micro prism MP1-2 of the first prism pattern layer 1214-1 may at least partially overlap the second peripheral micro prism MP2-2 of the second prism pattern layer 1214-2 along the vertical direction.

The first central micro prism MP1-1 of the first prism pattern layer 1214-1 may at least partially overlap the non-patterned area NPA2 of the second prism pattern layer 1214-2 along the vertical direction. The second central micro prism MP2-1 of the second prism pattern layer 1214-2 may at least partially overlap the non-patterned area NPA1 of the first prism pattern layer 1214-1 along the vertical direction.

Since the central micro prisms MP1-1, MP2-1 are formed thicker than the peripheral micro prisms MP1-2, MP2-2, a difference in retroreflectivity may occur between the central micro prisms MP1-1, MP2-1 and the peripheral micro prisms MP1-2, MP2-2. Therefore, as described above, by disposing the peripheral micro prisms MP1-2, MP2-2 to overlap along the vertical direction to increase retroreflectivity, pattern visibility due to differences in retroreflectivity may be enhanced. In this case, the retroreflectivity measured by both peripheral micro prisms MP1-2, MP2-2 arranged to overlap along the vertical direction may be substantially identical or similar to the retroreflectivity measured by either the first central micro prism MP1-1 or the second central micro prism MP2-1.

The width along the horizontal direction of the patterned areas PA1, PA2 of either the first prism pattern layer 1214-1 or the second prism pattern layer 1214-2 may be substantially identical or similar to the width along the horizontal direction of the non-patterned areas NPA1, NPA2 of the other prism pattern layers 1214-1, 1214-2. For example, the width along the horizontal direction of the first patterned area PA1 may be substantially identical or similar to the width along the horizontal direction of the second non-patterned area NPA2. For example, the width along the horizontal direction of the second patterned area PA2 may be substantially identical or similar to the width along the horizontal direction of the first non-patterned area NPA1. Accordingly, in case that the back cover 1200 with the first prism pattern layer 1214-1 and the second prism pattern layer 1214-2 stacked is viewed from above (e.g., in case of being viewed in the vertical direction), the boundary between the first patterned area PA1 and the second patterned area PA2 may be almost invisible.

The second prism pattern layer 1214-2 may be disposed above the first prism pattern layer 1214-1 along the vertical direction. Since the second prism pattern layer 1214-2 is positioned closer to the cover layer 1217 compared to the first prism pattern layer 1214-1, the second prism pattern layer 1214-2 may be more advantageous for retroreflection than the first prism pattern layer 1214-1. Accordingly, the horizontal width of the second patterned area PA2 of the second prism pattern layer 1214-2, which is positionally advantageous for retroreflection, is larger than the horizontal width of the first patterned area PA1 of the first prism pattern layer 1214-1, and overall retroreflection efficiency may be enhanced.

The cover layer 1217 may be disposed on the two or more prism pattern layers 1214-1, 1214-2. For example, the cover layer 1217 may be disposed on the second prism pattern layer 1214-2 positioned higher among the two or more prism pattern layers 1214-1, 1214-2. For example, the cover layer 1217 may be disposed on the second substrate layer 1215-2 bonded to the second prism pattern layer 1214-2.

The cover layer 1217 is positioned at the outermost side of the back cover 1200 and may be exposed to the external environment. The cover layer 1217 may be composed of materials having optical transparency. The cover layer 1217 may include, e.g., glass, PC, acrylic, PTFE, or ETFE, but the disclosure is not limited thereto. The cover layer 1217 may have excellent durability, chemical stability, and optical properties. The cover layer 1217 may be bonded to the second substrate layer 1215-2 by the third adhesive layer 1216. The cover layer 1217 may be disposed across at least a portion or all of the patterned areas PA1, PA2 (e.g., including the first patterned area PA1 or the second patterned area PA2) and/or the non-patterned areas NPA1, NPA2 (e.g., including the first non-patterned area NPA1 or the second non-patterned area NPA2), and may be bonded to the second substrate layer 1215-2.

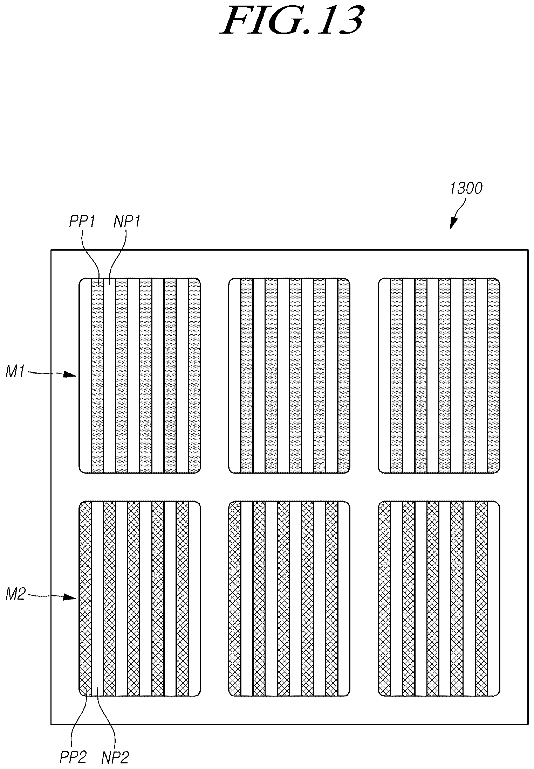

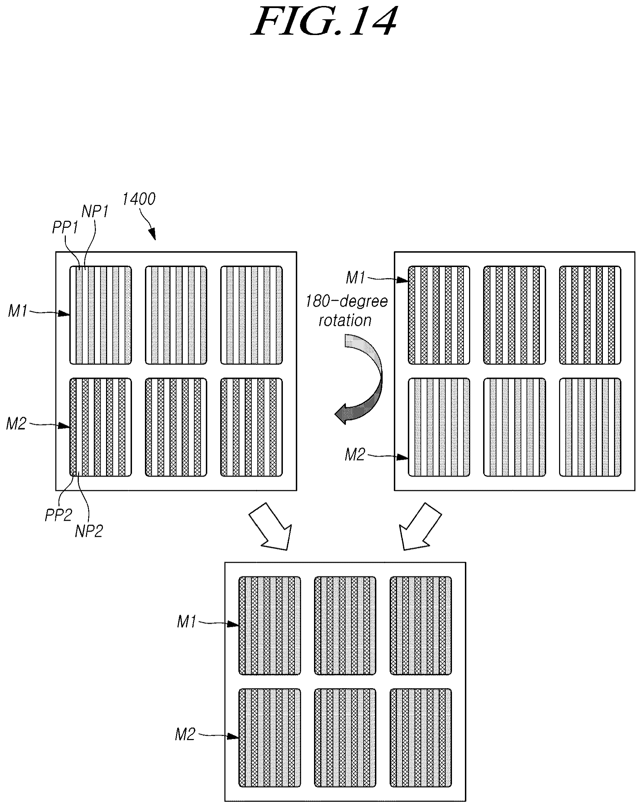

FIG. 13 exemplarily illustrates a processing mold for manufacturing a back cover including a multilayer retroreflective structure according to various embodiments of the disclosure. FIG. 14 exemplarily describes a method for manufacturing a back cover including a multilayer retroreflective structure according to various embodiments of the disclosure.

Referring to FIGS. 13 and 14, two prism pattern layers for a multilayer retroreflective structure may be manufactured by processing and/or molding methods such as imprinting. Exemplarily, two prism pattern layers may be manufactured using two types of UV molding dies.

A first UV die M1 may have a molding portion for forming a first prism pattern layer (e.g., the first prism pattern layer 714-1 of FIG. 7, the first prism pattern layer 914-1 of FIG. 9, the first prism pattern layer 1014-1 of FIG. 10, the first prism pattern layer 1114-1 of FIG. 11, the first prism pattern layer 1214-1 of FIG. 12), and a second UV die M2 may have a molding portion for forming a second prism pattern layer (e.g., the second prism pattern layer 714-2 of FIG. 7, the second prism pattern layer 914-2 of FIG. 9, the second prism pattern layer 1014-2 of FIG. 10, the second prism pattern layer 1114-2 of FIG. 11, the second prism pattern layer 1214-2 of FIG. 12).

For example, the first UV die M1 may include a first patterned molding portion PP1 corresponding to the first patterned area and a first non-patterned molding portion NP1 corresponding to the first non-patterned area. For example, the second UV die M2 may include a second patterned molding portion PP2 corresponding to the second patterned area and a second non-patterned molding portion NP2 corresponding to the second non-patterned area.

The first UV die M1 and the second UV die M2 may be disposed in one processing frame, and the processing frame may rotate. As the processing frame rotates 180 degrees, the positions of the first UV die M1 and the second UV die M2 may be switched 180 degrees.

An exemplary manufacturing method may include primarily performing processes such as molding, deposition, and/or printing on an arbitrary substrate using the first UV die M1 and the second UV die M2 on a sheet-by-sheet basis, and then rotating the processing frame 180 degrees to perform processes such as molding, deposition, and/or printing again on a sheet-by-sheet basis. According to this manufacturing method, two prism pattern layers may be easily formed using one processing frame, and die costs and manufacturing costs may be decreased.

Devices according to various exemplary embodiments of the disclosure may be described as follows.

A terminal device including a multilayer retroreflective structure according to an aspect of the disclosure includes a housing and a back cover forming the rear surface of the housing, wherein the back cover includes: a shielding print layer; a base layer disposed on the shielding print layer; two or more prism pattern layers disposed on the base layer; one or more substrate layers bonded to at least one of the two or more prism pattern layers; and a cover layer disposed on the two or more prism pattern layers.

According to an embodiment, the two or more prism pattern layers include a first prism pattern layer and a second prism pattern layer disposed above the first prism pattern layer, and the first prism pattern layer and the second prism pattern layer may be spaced apart from each other.

According to an embodiment, the one or more substrate layers include a first substrate layer and a second substrate layer, the first prism pattern layer is bonded to the first substrate layer, and the second prism pattern layer may be bonded to the second substrate layer.

According to an embodiment, the first prism pattern layer includes a first patterned area and a first non-patterned area, the second prism pattern layer includes a second patterned area and a second non-patterned area, at least a portion of the first patterned area and the second non-patterned area overlap, and at least a portion of the second patterned area and the first non-patterned area may overlap.

According to an embodiment, in the first non-patterned area, the first prism pattern layer may be bonded to the base layer.

According to an embodiment, in the first patterned area, the first prism pattern layer may be spaced apart from the base layer and form a first air cell.

According to an embodiment, in the second non-patterned area, the second prism pattern layer may be bonded to the first substrate layer.

According to an embodiment, in the second patterned area, the second prism pattern layer may be spaced apart from the first substrate layer and form a second air cell.

According to an embodiment, the second prism pattern layer may be bonded to the cover layer.

According to an embodiment, the two or more prism pattern layers include a plurality of micro prisms, the plurality of micro prisms include a central micro prism and one or more peripheral micro prisms, and the central micro prism and the peripheral micro prisms may have different dimensions.

The electronic device according to various embodiments may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. In case of being distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A terminal device (200) including a multilayer retroreflective structure, comprising:
a housing (210) and a back cover (700, 800) forming a rear surface (210b) of the housing (210), and wherein the back cover (700, 800) comprises:
a shielding print layer (711);
a base layer (712) disposed on the shielding print layer (711);
two or more prism pattern layers (714-1, 714-2) disposed on the base layer (712);
one or more substrate layers (715-1, 715-2) bonded to at least one of the two or more prism pattern layers (714-1, 714-2); and
a cover layer (717) disposed on the two or more prism pattern layers (714-1, 714-2).

2. The terminal device of claim 1, wherein the two or more prism pattern layers (714-1, 714-2) comprise a first prism pattern layer (714-1) and a second prism pattern layer (714-2) disposed above the first prism pattern layer (714-1), and wherein the first prism pattern layer (714-1) and the second prism pattern layer (714-2) are spaced apart from each other.

3. The terminal device of claim 2, wherein the one or more substrate layers (715-1, 715-2) comprise a first substrate layer (715-1) and a second substrate layer (715-2), the first prism pattern layer (714-1) is bonded to the first substrate layer (715-1), and the second prism pattern layer (714-2) is bonded to the second substrate layer (715-2).

4. The terminal device of claim 2 or 3, wherein the first prism pattern layer (714-1) comprises a first patterned area (PA1) and a first non-patterned area (NPA1), and the second prism pattern layer (714-2) comprises a second patterned area (PA2) and a second non-patterned area (NPA2), and wherein at least a portion of the first patterned area (PA1) and the second non-patterned area (NPA2) overlap, and at least a portion of the second patterned area (PA2) and the first non-patterned area (NPA1) overlap.

5. The terminal device of claim 4, wherein in the first non-patterned area (NPA1), the first prism pattern layer (714-1) is bonded to the base layer (712).

6. The terminal device of claim 4, wherein in the first patterned area (PA1), at least a portion of the first prism pattern layer (714-1) is spaced apart from the base layer (NPA1) and forms a first air cell.

7. The terminal device of claim 4, wherein in the second non-patterned area (NPA2), the second prism pattern layer (714-2) is bonded to the first substrate layer (715-1).

8. The terminal device of claim 4, wherein in the second patterned area (PA2), at least a portion of the second prism pattern layer (714-2) is spaced apart from the first substrate layer (715-1) and forms a second air cell.

9. The terminal device of claim 4, wherein the first prism pattern layer (714-1) is thicker than the second prism pattern layer (714-2).

10. A multilayer retroreflective film (500) comprising:
a shielding print layer (711);
a base layer (712) disposed on the shielding print layer (711);
two or more prism pattern layers (714-1, 714-2) disposed on the base layer (712);
one or more substrate layers (715-1, 715-2) bonded to at least one of the two or more prism pattern layers (714-1, 714-2); and
a cover layer (717) disposed on the two or more prism pattern layers (714-1, 714-2).

11. The multilayer retroreflective film of claim 10, wherein the two or more prism pattern layers (714-1, 714-2) comprise a first prism pattern layer (714-1) and a second prism pattern layer (714-2) disposed above the first prism pattern layer (714-1), and wherein the first prism pattern layer (714-1) and the second prism pattern layer (714-2) are spaced apart from each other.

12. The multilayer retroreflective film of claim 11, wherein the one or more substrate layers (715-1, 715-2) comprise a first substrate layer (715-1) and a second substrate layer, the first prism pattern layer (714-1) is bonded to the first substrate layer (715-1), and the second prism pattern layer (714-2) is bonded to the second substrate layer.

13. The multilayer retroreflective film of claim 11, wherein the first prism pattern layer (714-1) comprises a first patterned area (PA1) and a first non-patterned area (NPA1), and the second prism pattern layer (714-2) comprises a second patterned area (PA2) and a second non-patterned area (NPA2), and wherein at least a portion of the first patterned area (PA1) and the second non-patterned area (NPA2) overlap, and at least a portion of the second patterned area (PA2) and the first non-patterned area (NPA1) overlap.

14. The multilayer retroreflective film of claim 11, wherein the second prism pattern layer (714-2) is bonded to the cover layer (717).

15. The multilayer retroreflective film of claim 11, wherein the two or more prism pattern layers (714-1, 714-2) comprise a plurality of micro prisms (MP1, MP2), wherein the plurality of micro prisms (MP1, MP2) comprise a central micro prism (MP1-1, MP2-1) and one or more peripheral micro prisms (MP1-2, MP2-2), and wherein the central micro prism (MP1-1, MP2-1) and the one or more peripheral micro prisms (MP1-2, MP2-2) have different dimensions.
